(19) Europäisches Patentamt
European Patent Office
Office européen des brevets

(11) EP 4 723 280 A1

(12) # EUROPEAN PATENT APPLICATION
published in accordance with Art. 153(4) EPC

(43) Date of publication:
**08.04.2026 Bulletin 2026/15**

(21) Application number: **23938956.2**

(22) Date of filing: **01.06.2023**

(51) International Patent Classification (IPC):
***H01M 10/0567*** *(2010.01)* ***H01M 10/0569*** *(2010.01)*

(52) Cooperative Patent Classification (CPC):
Y02E 60/10

(86) International application number:
**PCT/CN2023/097841**

(87) International publication number:
**WO 2024/243969 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Ziebig Hengelhaupt Intellectual Property Attorneys Patentanwaltskanzlei PartGmbB**
**Leipziger Straße 49**
**10117 Berlin (DE)**

(54) **NONAQUEOUS ELECTROLYTE FOR SECONDARY BATTERY, SECONDARY BATTERY, AND ELECTRIC DEVICE**

(57) Provided in the present application are a non-aqueous electrolyte solution for a secondary battery, a secondary battery, and an electrical apparatus. The non-aqueous electrolyte solution for a secondary battery of the present application comprises an additive and a non-aqueous solvent, wherein the non-aqueous solvent comprises a first solvent; the additive comprises a cyclic sulfate compound as shown in formula (I); and the first solvent is selected from one or more of ethylene glycol dimethyl ether, a compound as shown in formula A, and a compound as shown in formula B;

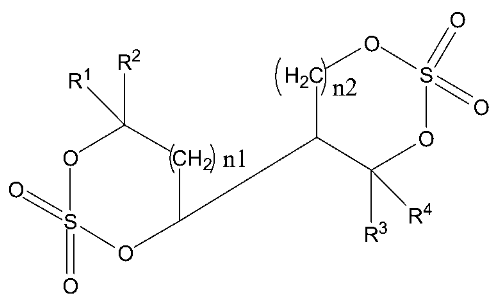

formula (I)

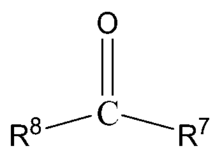

formula A

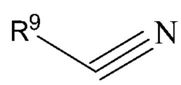

formula B.

EP 4 723 280 A1

5

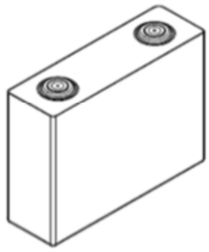

FIG. 1

## Description

### TECHNICAL FIELD

The present application relates to the technical field of lithium batteries, and particularly relates to a non-aqueous electrolyte solution for a secondary battery, a secondary battery, and an electrical apparatus.

### BACKGROUND

In recent years, as secondary batteries are increasingly widely applied in energy storage power systems, such as water, fire, wind, and solar power stations, as well as many fields, such as electric tools, electric bicycles, electric motorcycles, electric vehicles, military equipment, and aerospace. Due to great development of the secondary batteries, higher requirements are also presented for, e.g., fast charging performance, cycling performance, and safety performance thereof.

### SUMMARY OF THE INVENTION

In view of the above issues, an object of the present application is to provide a non-aqueous electrolyte solution for a secondary battery, a secondary battery, and an electrical apparatus. The non-aqueous electrolyte solution of the present application improves fast charging performance, cycling performance, and storage performance of the battery, and reduces aerogenous quantity in cycles of the battery.

In order to achieve the above object, a first aspect of the present application provides a non-aqueous electrolyte solution for a secondary battery, comprising an additive and a non-aqueous solvent, wherein the non-aqueous solvent comprises a first solvent;

the additive comprises a cyclic sulfate compound represented by formula (I),

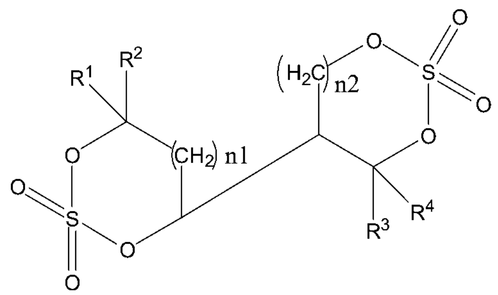

formula (I)

wherein $R^1$, $R^2$, $R^3$, and $R^4$ are each independently selected from any one of a radical having a structure represented by formula (II), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, n1 and n2 are each independently any integer of 0-2,

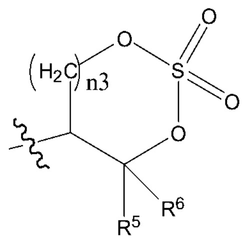

formula (II)

$R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, n3 is any integer of 0-2; and

$R^1$ and $R^2$ are not simultaneously hydrogen atoms, and $R^3$ and $R^4$ are not simultaneously hydrogen atoms;
or, $R^1$, $R^2$, $R^3$, $R^4$, $R^5$, and $R^6$ satisfy conditions below:

$R^1$ and $R^2$ are simultaneously hydrogen atoms, one of $R^3$ and $R^4$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
or, $R^1$, $R^2$, $R^3$, $R^4$, $R^5$, and $R^6$ satisfy conditions below:

$R^3$ and $R^4$ are simultaneously hydrogen atoms, one of $R^1$ and $R^2$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
the first solvent is selected from one or more of ethylene glycol dimethyl ether, a compound represented by formula A, and a compound represented by formula B,

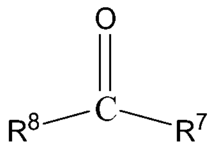
formula A

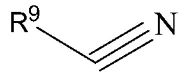
formula B

wherein $R^7$, $R^8$, and $R^9$ are each independently selected from any one of a C1-C6 alkyl, a C1-C6 haloalkyl, a C1-C6 alkoxy, and a C1-C6 haloalkoxy; and
further, $R^7$ and $R^8$ do not comprise oxygen atoms simultaneously.

Therefore, the present application forms a non-aqueous electrolyte solution by combining the first solvent and the additive; on the one hand, the first solvent can enable the electrolyte solution to have low viscosity, thus improving the conductivity of the electrolyte solution, and improving the fast charging performance of the battery; and on the other hand, during the battery charging, the additive forms a more stable inorganic-organic hybrid SEI film with stronger electron blocking ability on the surface of the negative electrode, thereby inhibiting reactions between the first solvent and the negative electrode, so that the battery has reduced aerogenous quantity in cycles, improved cycling performance, and improved storage performance.

In any embodiment, the cyclic sulfate compound has a structure represented by formula (1-1),

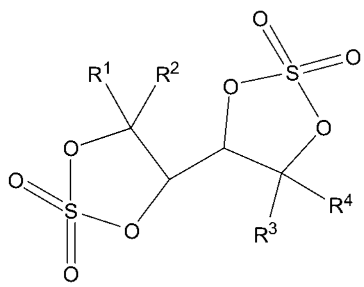
formula (I-1)

$R^1$, $R^2$, $R^3$, and $R^4$ are each independently selected from any one of a radical having a structure represented by formula (II-1), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl;

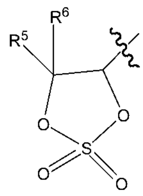

formula (II-1)

and $R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl.

The cyclic sulfate rings in the above general formula (I-1) are all five-membered rings, which can form a more compact SEI film. Compared with a six-membered ring, the five-membered ring has a larger ring tension and tends to form a film at the negative electrode, while the six-membered ring has a smaller ring tension, and higher stability with slower film formation at the negative electrode. Therefore, the electron blocking SEI film is less efficiently generated, which affects the effect of the SEI film.

In any embodiment, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, a C1-C3 haloalkoxy, and a cyano; $R^5$ and $R^6$ are each independently selected from any one of a hydrogen atom, a halogen atom, a C1-C3 alkyl, a C1-C3 haloalkyl, a C1-C3 alkoxy, a C1-C3 haloalkoxy, and a cyano;

optionally, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, and a cyano; $R^5$ and $R^6$ are each independently selected from any one of a hydrogen atom, a halogen atom, a C1-C3 alkyl, a C1-C3 haloalkyl, a C1-C3 alkoxy, and a cyano;

more optionally, $R^1$, $R^2$, $R^3$, and $R^4$ are each independently selected from any one of a radical having a structure represented by general formula (II-1), a hydrogen atom, a F atom, a Cl atom, a Br atom, a methyl, an ethyl, a propyl, an isopropyl, a trifluoromethyl, an ethoxy, and a cyano; $R^5$ and $R^6$ are each independently selected from any one of a hydrogen atom, a F atom, a Cl atom, a Br atom, a methyl, an ethyl, a propyl, an isopropyl, a trifluoromethyl, an ethoxy, and a cyano; and

further optionally, the radical having a structure represented by general formula (II-1) is selected from any one of radicals below:

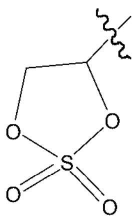 , 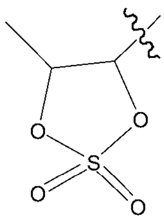 , 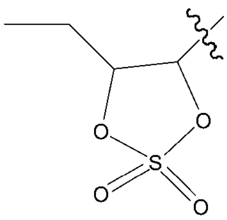 , 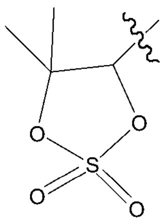 , 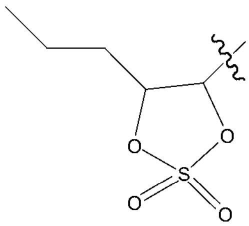 , 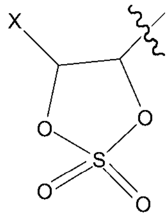 ,

or

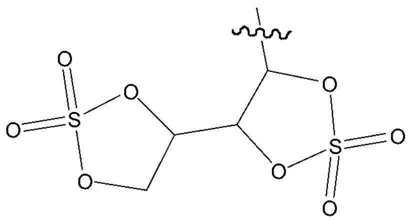 ,

wherein X is a F atom, a Cl atom, or a Br atom.

In any embodiment, $R^1$, $R^2$, $R^3$, and $R^4$ are each independently selected from any one of

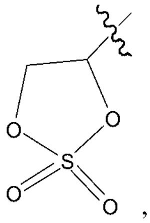 ,

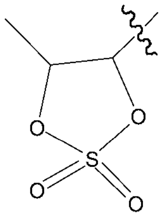 , 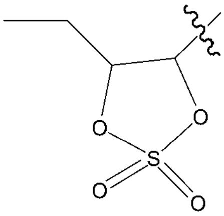 , 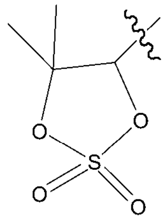 , 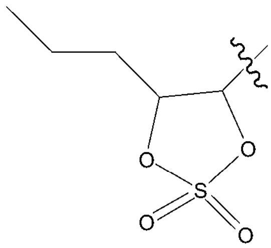 , 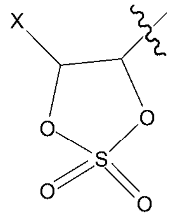 ,

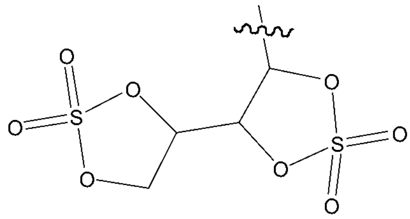 ,

a hydrogen atom, a F atom, a Cl atom, a Br atom, a methyl, an ethyl, a propyl, an isopropyl, a trifluoromethyl, an ethoxy, and a cyano, and the X is a F atom; and

optionally, $R^1$, $R^2$, $R^3$, and $R^4$ are each independently selected from any one of

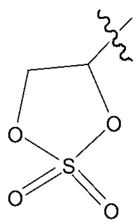 , 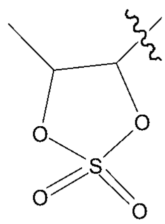 ,

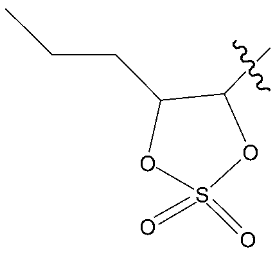 , 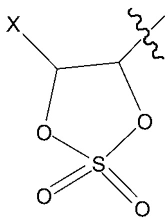 , 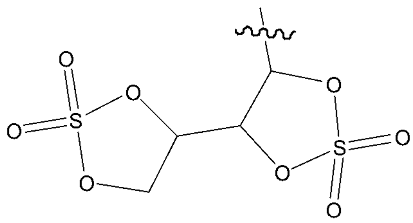 ,

a hydrogen atom, a F atom, a methyl, an ethyl, a propyl, a trifluoromethyl, an ethoxy, and a cyano, and the X is a F atom.

In any embodiment, the cyclic sulfate compound is selected from compounds below:

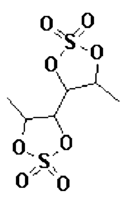 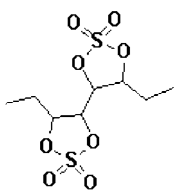 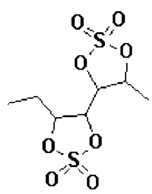 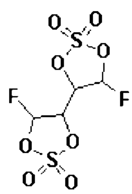 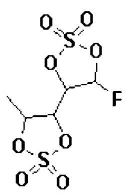

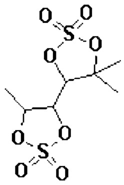 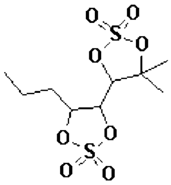 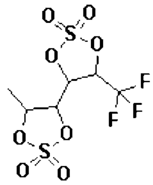 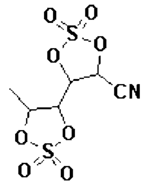 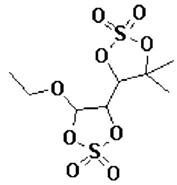

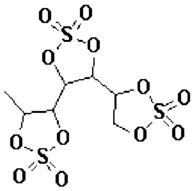 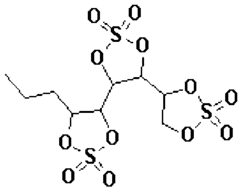 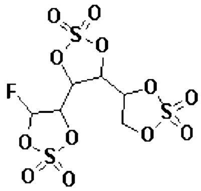 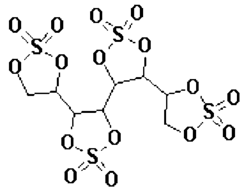 .

The preparation method of the above cyclic sulfate compound is simple, which is conducive to popularization and implementation in industry, and has a more stable improvement effect on the cycling performance of the battery.

In any embodiment, $R^7$, $R^8$, and $R^9$ are each independently selected from any one of a C1-C3 alkyl, a C1-C3 haloalkyl, a C1-C3 alkoxy, and a C1-C3 haloalkoxy; and $R^7$ and $R^8$ do not comprise oxygen atoms simultaneously; and optionally, $R^7$, $R^8$, and $R^9$are each independently selected from any one of methyl, ethyl, propyl, fluoromethyl, fluoroethyl, fluoropropyl, methoxy, ethoxy, propoxy, fluoromethoxy, fluoroethoxy, and fluoropropoxy.

In any embodiment, $R^7$ and $R^8$ are each independently selected from any one of a C1-C6 alkyl, a C1-C6 haloalkyl, a C1-C6 alkoxy, and a C1-C6 haloalkoxy; $R^9$ is selected from any one of a C1-C6 alkyl and a C1-C6 haloalkyl; and $R^7$ and $R^8$ do not comprise oxygen atoms simultaneously.

In any embodiment, $R^7$ and $R^8$ are each independently selected from any one of a C1-C3 alkyl, a C1-C3 haloalkyl, a C1-C3 alkoxy, and a C1-C3 haloalkoxy; $R^9$ is selected from any one of a C1-C3 alkyl and a C1-C3 haloalkyl; and $R^7$ and $R^8$ do not comprise oxygen atoms simultaneously;

optionally, $R^7$ and $R^8$ are each independently selected from any one of a methyl, an ethyl, a propyl, a fluoromethyl, a fluoroethyl, a fluoropropyl, a methoxy, an ethoxy, a propoxy, a fluoromethoxy, a fluoroethoxy, and a fluoropropoxy; $R^9$ is selected from any one of a methyl, an ethyl, a propyl, a fluoromethyl, a fluoroethyl, and a fluoropropyl; and more optionally, $R^7$ and $R^8$ are each independently selected from any one of a methyl, an ethyl, a monofluoromethyl, a difluoromethyl, a trifluoromethyl, a 2-fluoroethyl, a methoxy, an ethoxy, a difluoromethoxy, and a 2,2,2-trifluoroethoxy; and $R^9$ is selected from any one of a methyl, an ethyl, a propyl, and a 2-fluoroethyl.

In any embodiment, the first solvent is selected from one or more of compounds below:

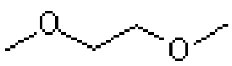, 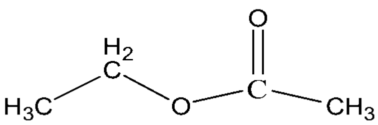, 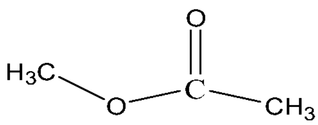,

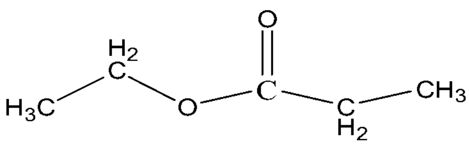, 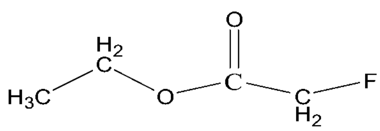,

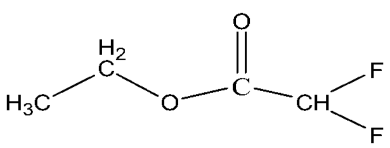, 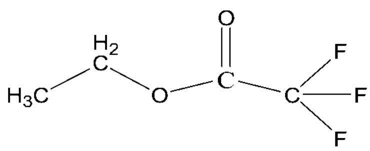, 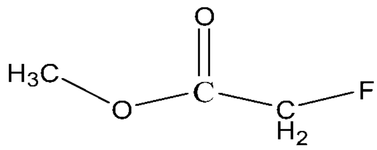,

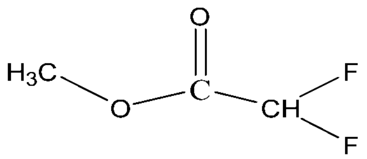, 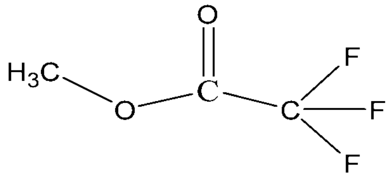, 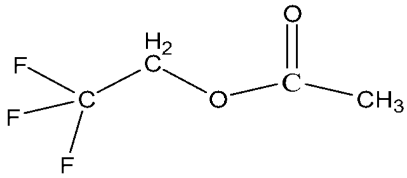,

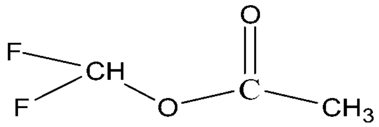, 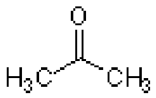, 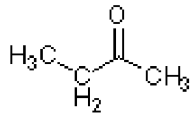, 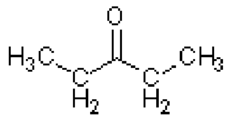,

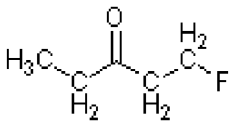, 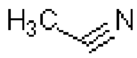, 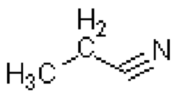, 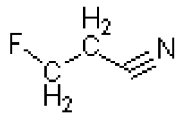, and 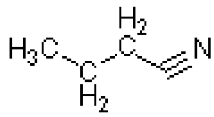.

The above first solvent enables the electrolyte solution to have low viscosity and high dielectric constant, then enables the electrolyte solution to have high conductivity, and improves the transmission rate of lithium ions in the electrolyte solution and the electrode plate, thereby improving the fast charging performance of the battery.

In any embodiment, mass content of the additive in the non-aqueous electrolyte solution is 0.001%-15%, optionally 0.005%-10%, more optionally 0.05%-5%.

The mass content of the additive in the non-aqueous electrolyte solution within the above range can further improve the conductivity of the electrolyte solution, thereby further improving the fast charging performance of the battery, improving the cycling performance and the storage performance of the battery, and reducing the aerogenous quantity in cycles of the battery.

In any embodiment, mass content of the first solvent in the non-aqueous solvent is 10%-90%, optionally 20%-80%, more optionally 30%-70%.

The mass content of the first solvent in the non-aqueous solvent within the above range can further improve the fast charging performance of the battery, improve the cycling performance and the storage performance of the battery, and reduce the aerogenous quantity in cycles of the battery.

A second aspect of the present application further provides a secondary battery, comprising the non-aqueous electrolyte solution in the first aspect of the present application and a negative electrode plate, wherein the negative electrode plate comprises a negative electrode active material; and optionally, the secondary battery is a lithium secondary battery.

Therefore, the present application forms a non-aqueous electrolyte solution by combining the first solvent and the additive; on the one hand, the first solvent can enable the electrolyte solution to have low viscosity, thus improving the conductivity of the electrolyte solution, and improving the fast charging performance of the battery; and on the other hand, during the battery charging, the additive forms a more stable inorganic-organic hybrid SEI film with stronger electron blocking ability on the surface of the negative electrode, thereby inhibiting reactions between the first solvent and the negative electrode, so that the battery has reduced aerogenous quantity in cycles, improved cycling performance, and improved storage performance.

In any embodiment, porosity of the negative electrode plate is 15%-35%, optionally 18%-30.5%, more optionally 20%-27%.

The porosity of the negative electrode plate within the above range is conducive to improving the energy density of the battery, while improving the transmission rate of lithium ions in the negative electrode plate, improving the fast charging performance and kinetic performance of the battery, improving the cycle life of the battery, and reducing the aerogenous quantity in cycles of the battery.

In any embodiment, volume average particle size Dv50 of the negative electrode active material is greater than or equal to 3 μm, optionally greater than or equal to 6 μm or 3-25 μm, more optionally 15-20 μm.

The volume average particle size Dv50 of the negative electrode active material satisfying the above range is conducive to forming a stable SEI film on the surface of the negative electrode, reducing side reactions between the electrolyte solution and the negative electrode active material, reducing the aerogenous quantity in cycles of the battery, and improving the cycling performance, the storage performance, and the fast charging performance of the battery.

A third aspect of the present application provides an electrical apparatus, comprising the non-aqueous electrolyte solution in the first aspect of the present application or the secondary battery in the second aspect of the present application.

## DESCRIPTION OF DRAWINGS

FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical apparatus in which a secondary battery is used as a power source according to an embodiment of the present application.

Description of reference numerals:
1. Battery pack; 2. Upper box; 3. Lower box; 4. Battery module; 5. Secondary battery; 51. Case; 52. Electrode assembly; 53. Top cover assembly.

## DETAILED DESCRIPTION

Embodiments of a non-aqueous electrolyte solution for a secondary battery, a secondary battery, a battery module, a battery pack, and an electrical apparatus of the present application are specifically disclosed below with reference to the detailed description of drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise particularly stated, in the present application, the term "halogen" is an atom of a Group VIIA element, including, e.g., fluorine (F), chlorine (Cl), bromine (Br), iodine (I), and astatine (At).

Unless otherwise particularly stated, in the present application, the term "C1-C6 alkyl" refers to a linear or branched alkyl containing 1 to 6 carbon atoms, specifically including a C1-C3 alkyl and a C2-C4 alkyl, such as methyl, ethyl, n-propyl, isopropyl, n-butyl, isobutyl, sec-butyl, tert-butyl, n-pentyl, isopentyl, neopentyl, or n-hexyl.

Unless otherwise particularly stated, in the present application, the term "C1-C6 haloalkyl" refers to a C1-C6 alkyl with one or more H thereon substituted with halogen, wherein the "C1-C6 alkyl" and the "halogen" are as defined above, specifically including a C1-C3 haloalkyl and a C2-C4 haloalkyl, such as monofluoromethyl, difluoromethyl, trifluoromethyl, or 2,2,2-trifluoroethyl.

Unless otherwise particularly stated, in the present application, the term "C1-C6 alkoxy" refers to a radical C1-C6 alkyl-O-, wherein the "C1-C6 alkyl" is as described above. Non-limiting examples of an appropriate C1-C6 alkoxy include, e.g., methoxy, ethoxy, and isopropoxy.

Unless otherwise particularly stated, in the present application, the term "C1-C6 haloalkoxy" refers to a C1-C6 alkoxy with one or more H thereon substituted with halogen, wherein the "C1-C6 alkoxy" and the "halogen" are as defined above, specifically including a C1-C3 haloalkoxy and a C2-C4 haloalkoxy, such as difluoromethoxy, trifluoromethoxy, or 2,2,2-trifluoroethoxy.

Unless otherwise particularly stated, in the present application, the term "C2-C6 alkenyl" refers to a linear or branched monovalent hydrocarbon radical containing 2-6 carbon atoms and having at least one unsaturated carbon-carbon double bond, specifically including a C2-C5 alkenyl and a C2-C4 alkenyl, such as ethylene, propylene, n-butylene, isobutylene, n-pentene, or isopentene.

Unless otherwise particularly stated, in the present application, the term "C2-C6 ester radical" refers to -COO-C1-C6 alkyl, wherein the "C1-C6 alkyl" is as described above, specifically including a C2-C5 ester radical and a C2-C4 ester radical, such as $-COOCH_3$ or $-COOCH_2CH_3$.

[Secondary battery]

A secondary battery also known as a rechargeable battery or a storage battery refers to a battery that can be used continually by activating an active material in a charging manner after the battery is discharged.

Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte solution mainly functions to conduct the active ions between the positive electrode plate and the negative electrode plate.

[Non-aqueous electrolyte solution for a secondary battery]

An embodiment of the present application provides a non-aqueous electrolyte solution for a secondary battery, comprising an additive and a non-aqueous solvent, wherein the non-aqueous solvent comprises a first solvent; and

the additive comprises a cyclic sulfate compound represented by formula (I),

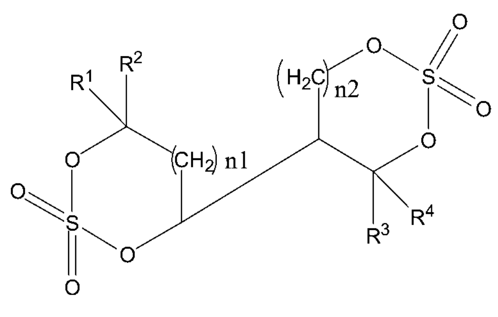

formula (I)

wherein $R^1$, $R^2$, $R^3$, and $R^4$ are each independently selected from any one of a radical having a structure represented by formula (II), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, n1 and n2 are each independently any integer of 0-2, such as 0, 1, or 2,

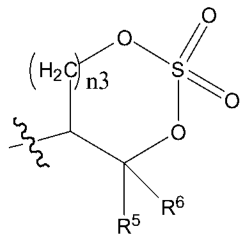

formula (II)

$R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, n3 is any integer of 0-2, such as 0, 1, or 2; and
$R^1$ and $R^2$ are not simultaneously hydrogen atoms, and $R^3$ and $R^4$ are not simultaneously hydrogen atoms;
or, $R^1$, $R^2$, $R^3$, $R^4$, $R^5$, and $R^6$ satisfy conditions below:

$R^1$ and $R^2$ are simultaneously hydrogen atoms, one of $R^3$ and $R^4$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
or, $R^1$, $R^2$, $R^3$, $R^4$, $R^5$, and $R^6$ satisfy conditions below:

$R^3$ and $R^4$ are simultaneously hydrogen atoms, one of $R^1$ and $R^2$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
the first solvent is selected from one or more of ethylene glycol dimethyl ether, a compound represented by formula A, and a compound represented by formula B,

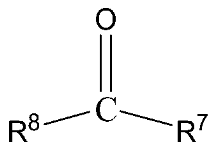

formula A

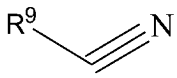

formula B

wherein $R^7$, $R^8$, and $R^9$ are each independently selected from any one of a C1-C6 alkyl, a C1-C6 haloalkyl, a C1-C6 alkoxy, and a C1-C6 haloalkoxy; and
further, $R^7$ and $R^8$ do not comprise oxygen atoms simultaneously.

Although the mechanism is not clear, the applicant unexpectedly finds that: the present application forms a non-aqueous electrolyte solution by combining the first solvent and the additive; on the one hand, the first solvent can enable the electrolyte solution to have low viscosity, thus improving the conductivity of the electrolyte solution, and improving the fast charging performance of the battery; and on the other hand, during the battery charging, the additive forms a more stable inorganic-organic hybrid SEI film with stronger electron blocking ability on the surface of the negative electrode, thereby inhibiting reactions between the first solvent and the negative electrode, so that the battery has reduced aerogenous quantity in cycles, improved cycling performance, and improved storage performance.
In some embodiments, the cyclic sulfate compound has a structure represented by formula (I-1),

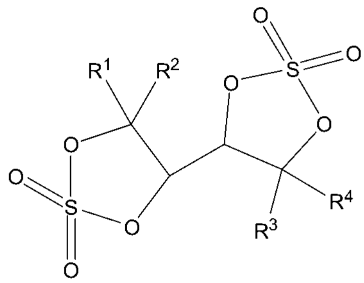

formula (I-1)

$R^1$, $R^2$, $R^3$, and $R^4$ are each independently selected from any one of a radical having a structure represented by formula (II-1), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl;

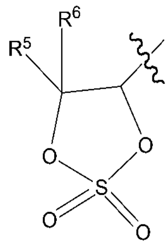

formula (II-1)

and $R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl.

The cyclic sulfate rings in the above general formula (I-1) are all five-membered rings, which can form a more compact SEI film. Compared with a six-membered ring, the five-membered ring has a larger ring tension and tends to form a film at the negative electrode, while the six-membered ring has a smaller ring tension, and higher stability with slower film formation at the negative electrode. Therefore, the electron blocking SEI film is less efficiently generated, which affects the effect of the SEI film.

In some embodiments, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, a C1-C3 haloalkoxy, and a cyano; $R^5$ and $R^6$ are each independently selected from any one of a hydrogen atom, a halogen atom, a C1-C3 alkyl, a C1-C3 haloalkyl, a C1-C3 alkoxy, a C1-C3 haloalkoxy, and a cyano;

optionally, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, and a cyano; $R^5$ and $R^6$ are each independently selected from any one of a hydrogen atom, a halogen atom, a C1-C3 alkyl, a C1-C3 haloalkyl, a C1-C3 alkoxy, and a cyano;

more optionally, $R^1$, $R^2$, $R^3$, and $R^4$ are each independently selected from any one of a radical having a structure represented by general formula (II-1), a hydrogen atom, a F atom, a Cl atom, a Br atom, a methyl, an ethyl, a propyl, an isopropyl, a trifluoromethyl, an ethoxy, and a cyano; $R^5$ and $R^6$ are each independently selected from any one of a hydrogen atom, a F atom, a Cl atom, a Br atom, a methyl, an ethyl, a propyl, an isopropyl, a trifluoromethyl, an ethoxy, and a cyano; and

further optionally, the radical having a structure represented by general formula (II-1) is selected from any one of radicals below:

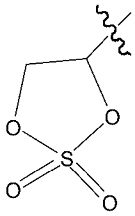, 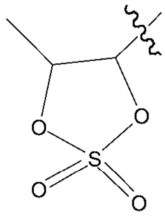, 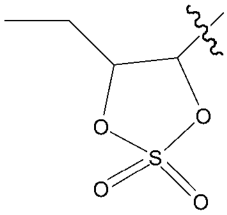, 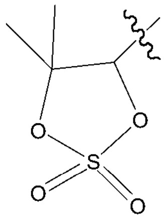, 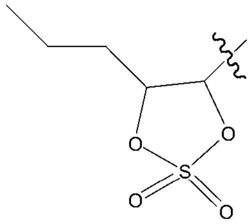, 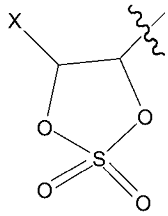,

or

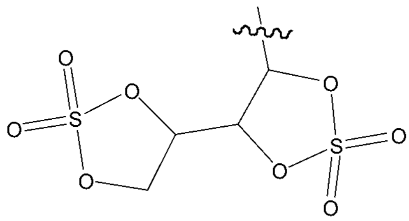,

wherein X is a F atom, a Cl atom, or a Br atom.

In some embodiments, $R^1$, $R^2$, $R^3$, and $R^4$ are each independently selected from any one of

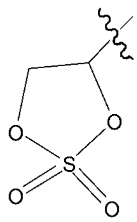,

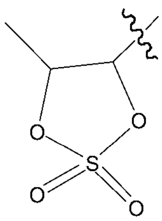, 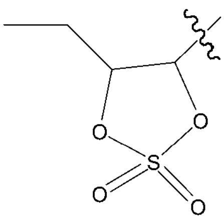, 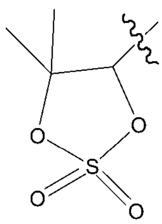, 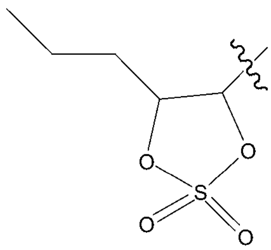, 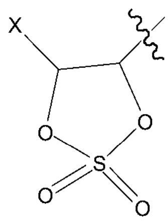,

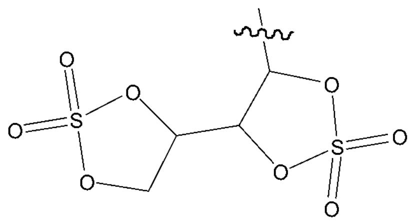,

a hydrogen atom, a F atom, a Cl atom, a Br atom, a methyl, an ethyl, a propyl, an isopropyl, a trifluoromethyl, an ethoxy, and a cyano, and the X is a F atom; and

optionally, $R^1$, $R^2$, $R^3$, and $R^4$ are each independently selected from any one of

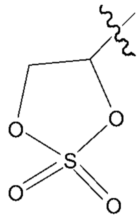 , 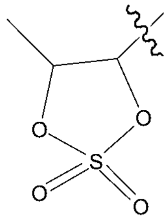 ,

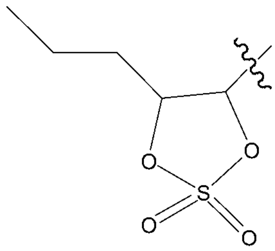 , 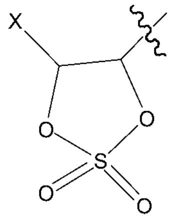 , 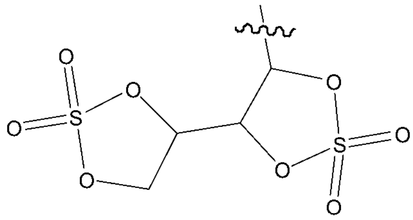 ,

a hydrogen atom, a F atom, a methyl, an ethyl, a propyl, a trifluoromethyl, an ethoxy, and a cyano, and the X is a F atom.

In some embodiments, the cyclic sulfate compound is selected from compounds below:

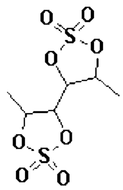 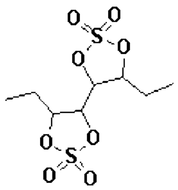 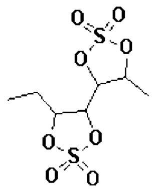 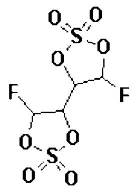 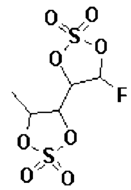

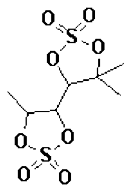 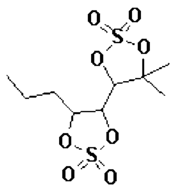 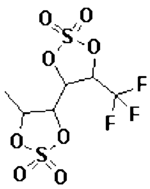 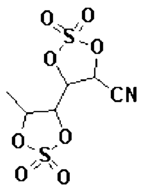 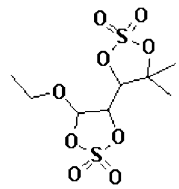

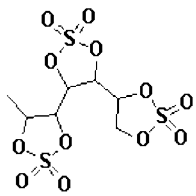 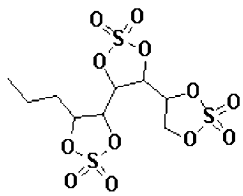 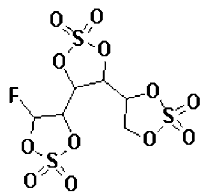 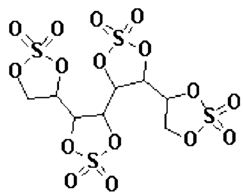 .

The preparation method of the above cyclic sulfate compound is simple, which is conducive to popularization and implementation in industry, and has a more stable improvement effect on the cycling performance of the battery.

The serial numbers of the above compounds are shown in the table below.

| Serial No. | Structural formula |
|---|---|
| Compound 1-1 | 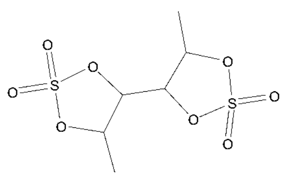 |

(continued)

| Serial No. | Structural formula |
|---|---|
| Compound 1-2 | 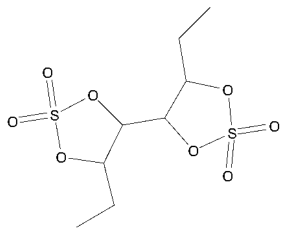 |
| Compound 1-3 | 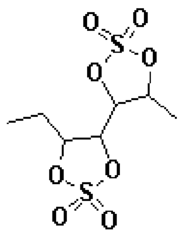 |
| Compound 1-4 | 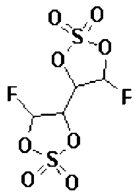 |
| Compound 1-5 | 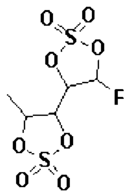 |
| Compound 1-6 | 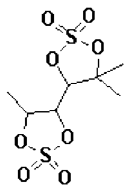 |
| Compound 1-7 | 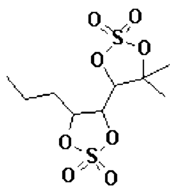 |
| Compound 1-8 | 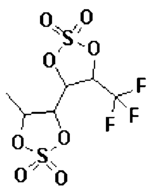 |

(continued)

| Serial No. | Structural formula |
|---|---|
| Compound 1-9 | 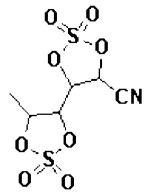 |
| Compound 1-10 | 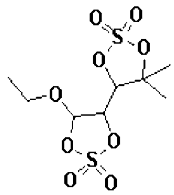 |
| Compound 1-11 | 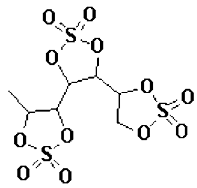 |
| Compound 1-12 | 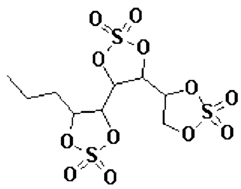 |
| Compound 1-13 | 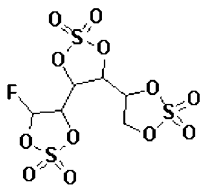 |
| Compound 1-14 | 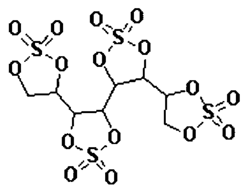 |

In some embodiments, a method for preparing a cyclic sulfate compound having a structure represented by general formula (I):
The following synthesis route is referred to for the preparation method of the cyclic sulfate ester compound having a structure represented by general formula (I) of the present application:

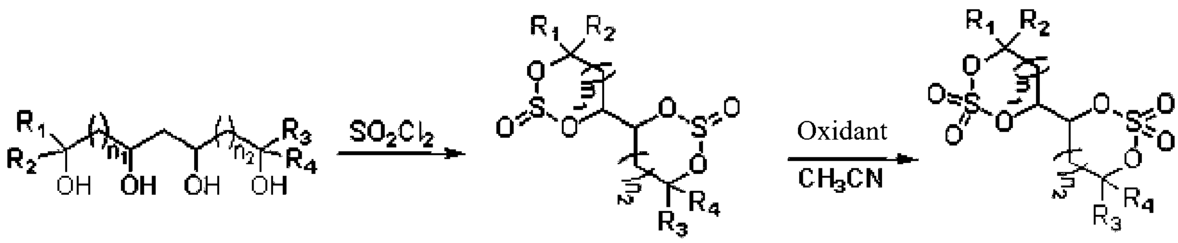

The reaction temperature in the first step is controlled at 30-60°C; and the reaction temperature in the second step is controlled at 10-30°C, wherein in the second step, a catalyst such as ruthenium trichloride trihydrate is used for catalysis, and an oxidant may be, e.g., sodium hypochlorite or ozone. Wherein, $R^1$, $R^2$, $R^3$, $R^4$, n1, and n2 are as defined above.

In some embodiments, $R^7$, $R^8$, and $R^9$ are each independently selected from any one of a C1-C3 alkyl, a C1-C3 haloalkyl, a C1-C3 alkoxy, and a C1-C3 haloalkoxy; and $R^7$ and $R^8$ do not comprise oxygen atoms simultaneously; and optionally, $R^7$, $R^8$, and $R^9$ are each independently selected from any one of methyl, ethyl, propyl, fluoromethyl, fluoroethyl, fluoropropyl, methoxy, ethoxy, propoxy, fluoromethoxy, fluoroethoxy, and fluoropropoxy.

In some embodiments, $R^7$ and $R^8$ are each independently selected from any one of a C1-C6 alkyl, a C1-C6 haloalkyl, a C1-C6 alkoxy, and a C1-C6 haloalkoxy; $R^9$ is selected from any one of a C1-C6 alkyl and a C1-C6 haloalkyl; and $R^7$ and $R^8$ do not comprise oxygen atoms simultaneously.

In some embodiments, $R^7$ and $R^8$ are each independently selected from any one of a C1-C3 alkyl, a C1-C3 haloalkyl, a C1-C3 alkoxy, and a C1-C3 haloalkoxy; $R^9$ is selected from any one of a C1-C3 alkyl and a C1-C3 haloalkyl; and $R^7$ and $R^8$ do not comprise oxygen atoms simultaneously;

optionally, $R^7$ and $R^8$ are each independently selected from any one of a methyl, an ethyl, a propyl, a fluoromethyl, a fluoroethyl, a fluoropropyl, a methoxy, an ethoxy, a propoxy, a fluoromethoxy, a fluoroethoxy, and a fluoropropoxy; $R^9$ is selected from any one of a methyl, an ethyl, a propyl, a fluoromethyl, a fluoroethyl, and a fluoropropyl; and more optionally, $R^7$ and $R^8$ are each independently selected from any one of a methyl, an ethyl, a monofluoromethyl, a difluoromethyl, a trifluoromethyl, a 2-fluoroethyl, a methoxy, an ethoxy, a difluoromethoxy, and a 2,2,2-trifluoroethoxy; and $R^9$ is selected from any one of a methyl, an ethyl, a propyl, and a 2-fluoroethyl.

In some embodiments, the first solvent is selected from one or more of compounds below:

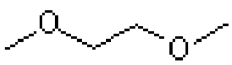, 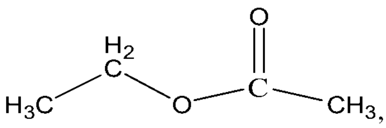, 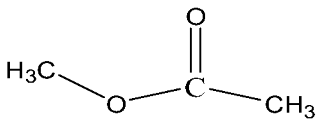,

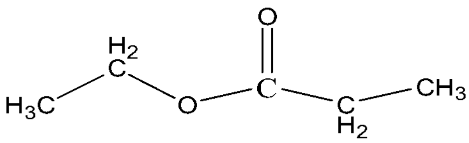, 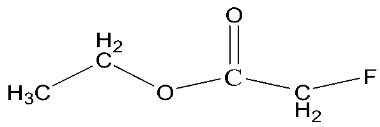,

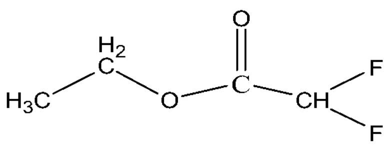, 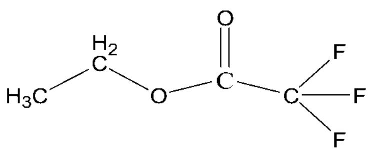, 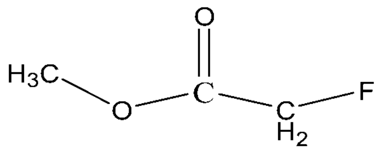,

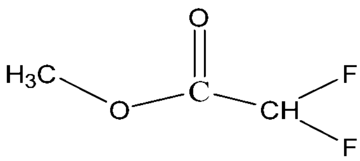, 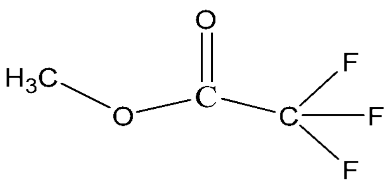, 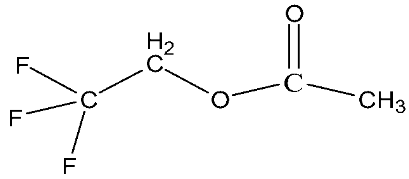,

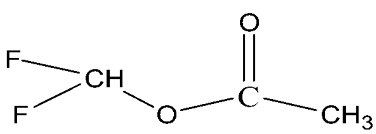, 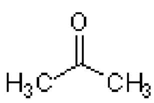, 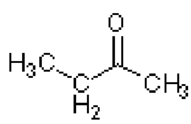, 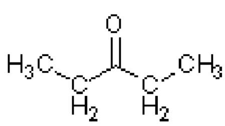,

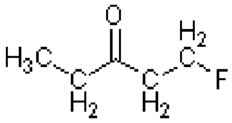, 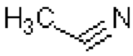, 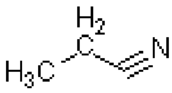, 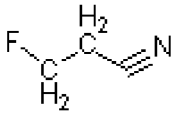, and 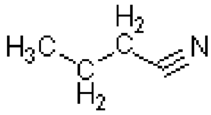.

The above first solvent enables the electrolyte solution to have low viscosity and high dielectric constant, then enables the electrolyte solution to have high conductivity, and improves the transmission rate of lithium ions in the electrolyte solution and the electrode plate, thereby improving the fast charging performance of the battery.

The serial numbers and CAS numbers of the above compounds are shown in the table below.

| Serial No. | Structural formula | CAS No. |
|---|---|---|
| Compound 2-1 | 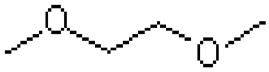 | 110-71-4 |
| Compound 2-2 | 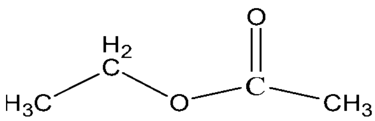 | 141-78-6 |
| Compound 2-3 | 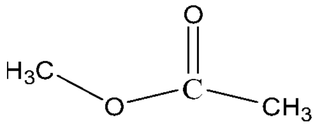 | 79-20-9 |
| Compound 2-4 | 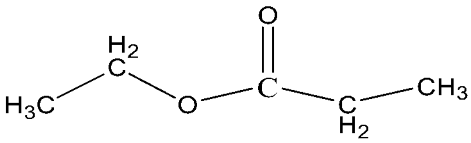 | 105-37-3 |
| Compound 2-5 | 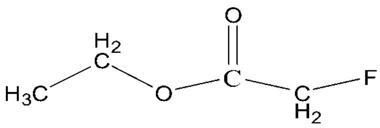 | 459-72-3 |
| Compound 2-6 | 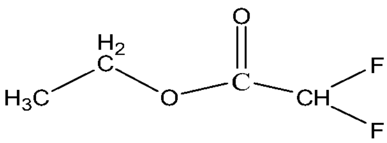 | 454-31-9 |
| Compound 2-7 | 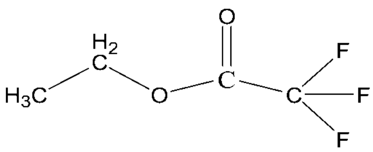 | 383-63-1 |
| Compound 2-8 | 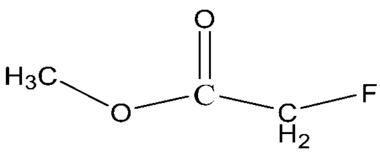 | 453-18-9 |
| Compound 2-9 | 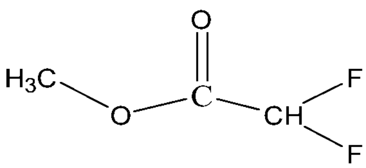 | 433-53-4 |

(continued)

| Serial No. | Structural formula | CAS No. |
|---|---|---|
| Compound 2-10 | 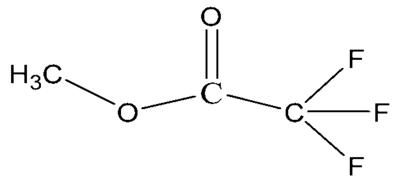 | 431-47-0 |
| Compound 2-11 | 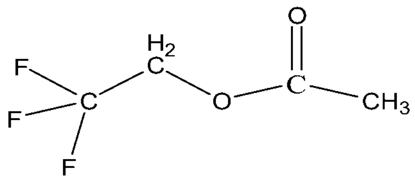 | 406-95-1 |
| Compound 2-12 | 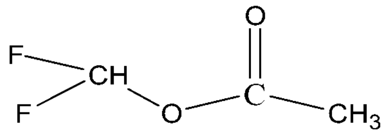 | 105198-13-8 |
| Compound 2-13 | 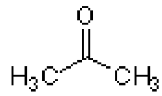 | 67-64-1 |
| Compound 2-14 | 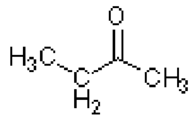 | 78-93-3 |
| Compound 2-15 | 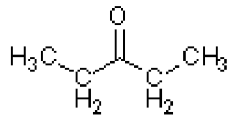 | 96-22-0 |
| Compound 2-16 | 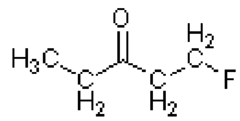 | 30390-91-1 |
| Compound 2-17 | 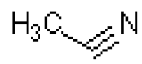 | 75-05-8 |
| Compound 2-18 | 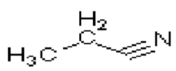 | 107-12-0 |
| Compound 2-19 | 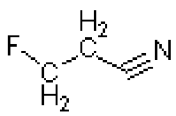 | 504-62-1 |
| Compound 2-20 | 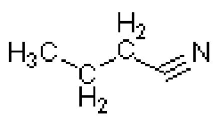 | 109-74-0 |

In some embodiments, mass content of the additive in the non-aqueous electrolyte solution is 0.001%-15%, optionally 0.005%-10%, more optionally 0.05%-5%, such as 0.001%, 0.003%, 0.005%, 0.01%, 0.05%, 0.1%, 0.5%, 0.8%, 1%, 2%, 3%, 5%, 7%, 8%, 9%, 10%, 11%, 12%, 13%, 15%, and a range consisting of any of the above values.

The mass content of the additive in the non-aqueous electrolyte solution within the above range can further improve the conductivity of the electrolyte solution, thereby further improving the fast charging performance of the battery,

improving the cycling performance and the storage performance of the battery, and reducing the aerogenous quantity in cycles of the battery.

In some embodiments, mass content of the first solvent in the non-aqueous solvent is 10%-90%, optionally 20%-80%, more optionally 30%-70%, such as 10%, 20%, 30%, 40%, 50%, 60%, 70%, 80%, 90%, and a range consisting of any of the above values.

The mass content of the first solvent in the non-aqueous solvent within the above range can further improve the fast charging performance of the battery, improve the cycling performance and the storage performance of the battery, and reduce the aerogenous quantity in cycles of the battery.

In some embodiments, the non-aqueous electrolyte solution comprises an electrolyte salt.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the non-aqueous electrolyte solution further comprises other solvents, which may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, 1,4-butyrolactone, sulfolane, dimethyl sulfone, methyl ethyl sulfone, and diethyl sulfone.

In some embodiments, the electrolyte solution further optionally comprises an additive. As an example, the additive may include a positive electrode film-forming additive, and may further include an additive that can improve some performances of the battery, such as an additive that improves the overcharge performance of the battery or an additive that improves the high-temperature or low-temperature performance of the battery.

[Positive electrode plate]

The positive electrode plate generally comprises a positive electrode current collector and a positive electrode film layer arranged on at least one surface of the positive electrode current collector, and the positive electrode film layer comprises the positive electrode active material.

As an example, the positive electrode current collector has two surfaces opposite in its own thickness direction, and the positive electrode film layer is arranged on any one or both of the two opposite surfaces of the positive electrode current collector.

In some embodiments, the positive electrode current collector may be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials that can be used as positive electrode active materials for batteries may also be used. Only a single one of or a combination of two or more of these positive electrode active materials can be used. Examples of the lithium transition metal oxide may include, but are not limited to, at least one of a lithium-cobalt oxide (such as $LiCoO_2$), a lithium-nickel oxide (such as $LiNiO_2$), a lithium-manganese oxide (such as $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), a lithium-nickel-cobalt-aluminum oxide (such as $LiNi_{0.85}Co_{0.15}Al_{0.05}O_2$), and a modified compound thereof. Examples of the lithium-containing phosphate of olivine structure may include, but are not limited to, at least one of lithium iron phosphate (e.g., $LiFePO_4$ (also abbreviated as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an

example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder and any other component, for preparing the positive electrode plate in a solvent (such as N-methyl pyrrolidone) to form a positive electrode slurry; and coating the positive electrode slurry on the positive electrode current collector, and performing drying and cold pressing processes to obtain the positive electrode plate.

[Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector may be formed by forming a metal material (such as copper, a copper alloy, nickel, a nickel alloy, titanium, a titanium alloy, silver, and a silver alloy) on the polymer material substrate (such as a substrate of polypropylene (PP), polyethylene terephthalate (PET), polybutylene terephthalate (PBT), polystyrene (PS), or polyethylene (PE)).

In some embodiments, porosity of the negative electrode plate is 15%-35%, optionally 18%-30.5%, more optionally 20%-27%, such as 15%, 17%, 18%, 19%, 20%, 22%, 24%, 25%,27%, 30%, 31%, 33%, 35%, and a range consisting of any of the above values.

The porosity of the negative electrode plate within the above range is conducive to improving the energy density of the battery, while improving the transmission rate of lithium ions in the negative electrode plate, improving the fast charging performance and kinetic performance of the battery, improving the cycle life of the battery, and reducing the aerogenous quantity in cycles of the battery.

In some embodiments, the porosity of the negative electrode plate is tested using an instrument and a method known in the art. For example, a small wafer sample with a diameter of 14 mm is cut from the negative electrode plate with a negative electrode film coated on a single side; the negative electrode film is tested for thickness (thickness of the negative electrode plate-thickness of the negative electrode current collector); apparent volume Vapparent of the negative electrode film is calculated as per the cylinder volume calculation formula; true volume of the negative electrode plate is measured by gas replacement using a true density tester (such as model Micromeritics AccuPyc II 1340) with an inert gas helium as the medium with reference to GB/T 24586-2009; the volume of the negative electrode current collector is subtracted from the true volume of the negative electrode plate to obtain the true volume Vtrue of the negative electrode film; and the porosity of the negative electrode plate is calculated as per the following formula. A plurality of (for example, 30) electrode plate samples may be tested, to obtain an average value of the results.

Porosity of negative electrode plate=100%×(Vapparent of negative electrode film-Vtrue of negative electrode film)/Vapparent of negative electrode film.

In some embodiments, volume average particle size Dv50 of the negative electrode active material is greater than or equal to 3 μm, optionally greater than or equal to 6 μm or 3-25 μm, more optionally 15-20 μm, for example, 3 μm, 4 μm, 5 μm, 6 μm, 7 μm, 8 μm, 9 μm, 10 μm, 12 μm, 13 μm, 15 μm, 17 μm, 18 μm, 20 μm, 21 μm, 22 μm, 23 μm, 25 μm, and a range consisting of any of the above values.

The volume average particle size Dv50 of the negative electrode active material satisfying the above range is conducive to forming a stable SEI film on the surface of the negative electrode, reducing side reactions between the electrolyte solution and the negative electrode active material, reducing the aerogenous quantity in cycles of the battery, and improving the cycling performance, the storage performance, and the fast charging performance of the battery.

The volume average particle size Dv50 represents a corresponding particle size when cumulative volume distribution percentage of the negative electrode active material reaches 50%. In some embodiments, the volume average particle size Dv50 is tested using an instrument and a method known in the art, for example, may be measured using a laser particle size analyzer (e.g., Master Size 300) with reference to GB/T 19077-2016 Particle size analysis-Laser diffraction methods.

In some embodiments, a negative electrode active material for a battery well known in the art may be used as the negative electrode active material. As an example, the negative electrode active material may include at least one of the following materials: artificial graphite, natural graphite, soft carbon, hard carbon, silicon-based material, tin-based material, lithium titanate, etc. The silicon-based material may be selected from at least one of elemental silicon,

silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally include a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

[Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may comprise a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator can be wound or laminated to form an electrode assembly 52. The electrode assembly 52 is encapsulated within the accommodating cavity. The electrolyte infiltrates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further comprise a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

Figs. 4 and 5 show a battery pack 1 as an example. Referring to FIGs. 4 and 5, the battery pack 1 may comprise a

battery box and a plurality of battery modules 4 provided in the battery box. The battery box comprises an upper box body 2 and a lower box body 3, wherein the upper box body 2 can cover the lower box body 3 to form an enclosed space for accommodating the battery module 4. The plurality of battery modules 4 may be arranged in the battery box in any manner.

In addition, the present application further provides an electrical apparatus. The electrical apparatus includes at least one of the secondary battery, the battery module, or the battery pack provided in the present application. The secondary battery, the battery module, or the battery pack may be used as a power source for the electrical apparatus, and may also be used as an energy storage unit for the electrical apparatus. The electrical apparatus may include a mobile device (e.g., a mobile phone, a laptop, etc.), an electric vehicle (e.g., all-electric vehicle, a hybrid electric vehicle, a plug-in hybrid electric vehicle, an electric bicycle, an electric scooter, an electric golf cart, an electric truck, etc.), an electric train, a ship and a satellite, and an energy storage system, etc., but is not limited thereto.

For the electrical apparatus, the secondary battery, the battery module, or the battery pack can be selected according to its use requirements.

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

[Examples]

Examples of the present application will be described below. The embodiments described below are illustrative and only used to explain the present application, and cannot be construed as limiting the present application. Embodiments in which techniques or conditions are not specified are implemented based on the techniques or conditions described in literatures of the art or based on the product manuals. Where manufacturers are not specified, the employed reagents or instruments are all commercially available conventional products. Information of other reagents or compounds is recorded in Table 1.

Table 1

| Material | Structural formula | CAS No. |
| --- | --- | --- |
| 1,6-dideoxygalactitol | 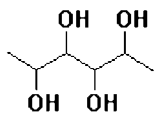 | 25289-20-7 |
| 3,4,5,6-octanetetrol | 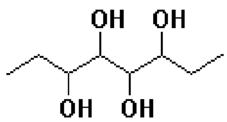 | 2165939-88-6 |
| 2,3,4,5-heptanetetrol | 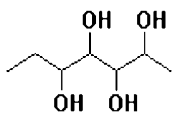 | 2629309-49-3 |
| 1,2,3,4,5,6-heptanehexol | 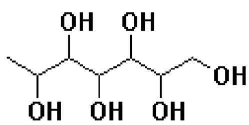 | 688007-16-1 |
| Octitol | 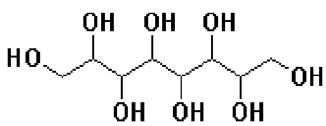 | 63976-32-9 |

(continued)

| Material | Structural formula | CAS No. |
|---|---|---|
| Comparative compound 1 | 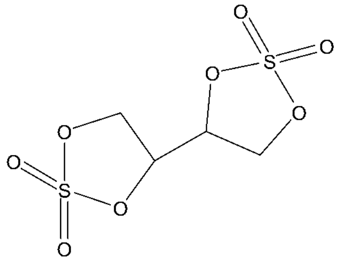 | 1431298-10-0 |
| Comparative compound 2 | 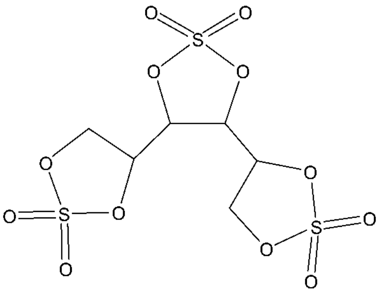 | 2793408-99-6 |

**Preparative example 1:** Synthesis of compound 1-1

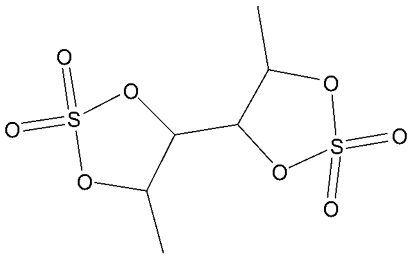

Step 1: 300 g (2 mol) of solid 1,6-dideoxygalactitol was added into a 2 L three-necked flask, and 523 g (4.4 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 184.2 g (0.8 mol) of intermediate product 1 was added into a 3 L three-necked flask, to which 1,000 mL of acetonitrile was added, and 80 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the above compound 1-1 as a white powder solid.

1H-NMR, $CD_3CN$, $\delta$ ppm 5.42-5.39 (m, 2H), 5.36-5.34 (m, 2H), 1.67-1.65 (d, 6H).

**Preparative example 2:** Synthesis of compound 1-2

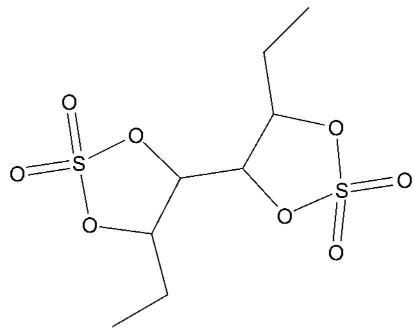

Step 1: 356.5 g (2 mol) of solid 3,4,5,6-octanetetrol was added into a 2 L three-necked flask, and 523 g (4.4 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 216.2 g (0.8 mol) of intermediate product 1 was added into a 3 L three-necked flask, to which 1,000 mL of acetonitrile was added, and 80 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 1-2.

**Preparative example 3:** Synthesis of compound 1-3

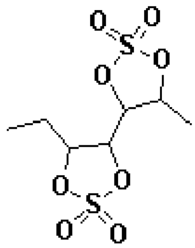

Step 1: 328.4 g (2 mol) of solid 2,3,4,5-heptanetetrol was added into a 2 L three-necked flask, and 523 g (4.4 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 205 g (0.8 mol) of intermediate product 1 was added into 23 three-necked flasks, to which 1,000 mL of acetonitrile was added, and the mixture was stirred until the solid was fully dissolved. 80 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 1-3 (163.1 g, yield: 82.8%).

**Preparative example 4:** Synthesis of compound 1-9

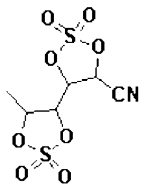

This example is same as Preparative Example 1 except that 1,6-dideoxygalactitol was replaced with

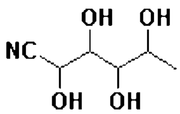

(CAS No.: 7460-93-7). LC-MS of the compound: 285.25.

**Preparative example 5:** Synthesis of compound 1-11

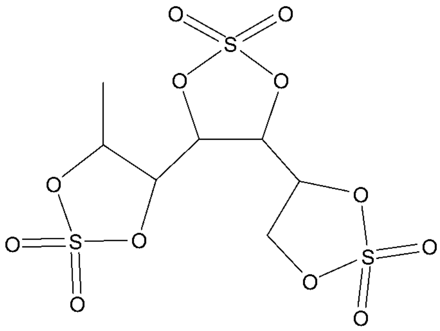

Step 1: 392.4 g (2 mol) of solid 1,2,3,4,5,6-heptanehexol was added into a 2 L three-necked flask, and 784.5 g (6.6 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 140 g (0.4 mol) of intermediate product 1 was added into a 4 L three-necked flask, to which 1,000 mL of acetonitrile was added, and 110 mg of a catalyst ruthenium trichloride trihydrate was added. After nitrogen replacement of the system, the system was cooled to 20 °C, to which 1,500 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 1-11.

**Preparative example 6:** Synthesis of compound 1-14

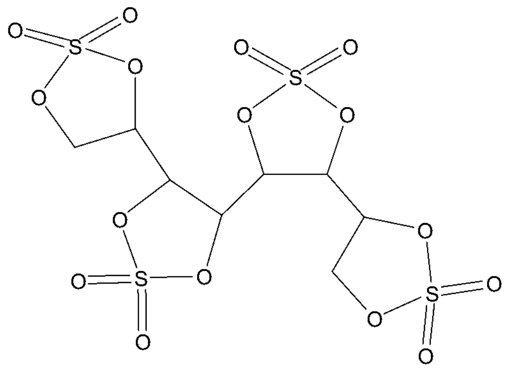

Step 1: 484 g (2 mol) of solid octitol was added into a 2 L three-necked flask, and 1046 g (8.8 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 183.2 g (0.4 mol) of the intermediate product was added into a 4 L three-necked flask, to which 1,000 mL of acetonitrile was added, and 150 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 1-14.

The preparation methods in the above preparative examples and the preparation method of the compound of the general formula are referred to for the preparation methods of compounds 1-4 to 1-8, 1-10, and 1-12 to 1-13.

**Example 1**

(1) Preparation of an electrolyte solution: In an argon atmosphere glove box ($H_2O$<0.1 ppm, $O_2$<0.1 ppm), organic solvents ethylene carbonate (EC)/ethyl methyl carbonate (EMC) at a volume ratio of 3/7 were fully mixed, methyl acetate (compound 2-3) was additionally added as a first solvent, and the addition amount of methyl acetate was adjusted so that its mass percentage in the solvent was 60%. Then, 2% (mass percentage in the electrolyte solution) of an additive compound 1-1 and 12.5% $LiPF_6$ (mass percentage in the electrolyte solution) were dissolved in the solvents, and the mixture was fully stirred to provide the electrolyte solution.

(2) Preparation of a negative electrode plate: a negative electrode active material graphite, a conductive agent carbon black, a binder styrene butadiene rubber (SBR), and a thickener sodium carboxymethyl cellulose (CMC-Na) at a weight ratio of 90:4:4:2 were dissolved in a solvent deionized water, and the mixture was fully mixed to prepare a negative electrode slurry; which was uniformly coated on a negative electrode current collector copper foil once or many times, and then subjected to drying, cold pressing under different pressures, and cutting, to provide the negative electrode plate.

(3) Preparation of a positive electrode plate: a positive electrode active material lithium iron phosphate ($LiFePO_4$), a conductive agent acetylene black, and a binder polyvinylidene fluoride (PVDF) at a weight ratio of 90:5:5 were dissolved in a solvent N-methylpyrrolidone (NMP), and the mixture was fully mixed by sufficiently stirring to obtain a positive electrode slurry; which was uniformly coated on a positive electrode current collector, and then subjected to drying, cold pressing, and cutting, to provide the positive electrode plate.

(4) Separator: A conventional polypropylene film was used as the separator.

(5) Assembly of a secondary battery: The positive electrode plate, the separator, and the negative electrode plate mentioned above were sequentially stacked, so that the separator was located between the positive and negative electrode plates to function for separation, and then winded to obtain an electrode assembly; which was transferred into a battery case and dried, into which the electrolyte solution was then injected, followed by the processes such as formation and standing, to provide the secondary battery.

The preparation method of the secondary battery in each of Examples 2-49 and Comparative Examples 1-2 is similar to that in Example 1, except for different product parameters detailed in Table 2. The porosity of the negative electrode plate was adjusted based on the pressure of the cold pressing.

Table 2: Parameter results in Examples 1-49 and Comparative Examples 1-2

| Serial No. | Electrolyte solution | | | | Negative electrode | |
|---|---|---|---|---|---|---|
| | Additive | First solvent | Mass content of first solvent in solvent (%) | Mass content of additive in electrolyte solution (%) | Porosity of negative electrode plate (%) | Dv50 particle size of negative electrode active material (μm) |
| Example 1 | Compound 1-1 | Compound 2-3 | 60 | 2 | 22 | 18 |
| Example 2 | Compound 1-2 | Compound 2-3 | 60 | 2 | 22 | 18 |
| Example 3 | Compound 1-3 | Compound 2-3 | 60 | 2 | 22 | 18 |
| Example 4 | Compound 1-4 | Compound 2-3 | 60 | 2 | 22 | 18 |
| Example 5 | Compound 1-5 | Compound 2-3 | 60 | 2 | 22 | 18 |
| Example 6 | Compound 1-6 | Compound 2-3 | 60 | 2 | 22 | 18 |
| Example 7 | Compound 1-7 | Compound 2-3 | 60 | 2 | 22 | 18 |
| Example 8 | Compound 1-8 | Compound 2-3 | 60 | 2 | 22 | 18 |
| Example 9 | Compound 1-9 | Compound 2-3 | 60 | 2 | 22 | 18 |
| Example 10 | Compound 1-10 | Compound 2-3 | 60 | 2 | 22 | 18 |
| Example 11 | Compound 1-11 | Compound 2-3 | 60 | 2 | 22 | 18 |
| Example 12 | Compound 1-12 | Compound 2-3 | 60 | 2 | 22 | 18 |
| Example 13 | Compound 1-13 | Compound 2-3 | 60 | 2 | 22 | 18 |
| Example 14 | Compound 1-14 | Compound 2-3 | 60 | 2 | 22 | 18 |
| Example 15 | Compound 1-1 | Compound 2-1 | 60 | 2 | 22 | 18 |
| Example 16 | Compound 1-1 | Compound 2-2 | 60 | 2 | 22 | 18 |
| Example 17 | Compound 1-1 | Compound 2-4 | 60 | 2 | 22 | 18 |
| Example 18 | Compound 1-1 | Compound 2-5 | 60 | 2 | 22 | 18 |
| Example 19 | Compound 1-1 | Compound 2-6 | 60 | 2 | 22 | 18 |

(continued)

| Serial No. | Electrolyte solution | | | | Negative electrode | |
|---|---|---|---|---|---|---|
| | Additive | First solvent | Mass content of first solvent in solvent (%) | Mass content of additive in electrolyte solution (%) | Porosity of negative electrode plate (%) | Dv50 particle size of negative electrode active material (μm) |
| Example 20 | Compound 1-1 | Compound 2-7 | 60 | 2 | 22 | 18 |
| Example 21 | Compound 1-1 | Compound 2-8 | 60 | 2 | 22 | 18 |
| Example 22 | Compound 1-1 | Compound 2-9 | 60 | 2 | 22 | 18 |
| Example 23 | Compound 1-1 | Compound 2-10 | 60 | 2 | 22 | 18 |
| Example 24 | Compound 1-1 | Compound 2-11 | 60 | 2 | 22 | 18 |
| Example 25 | Compound 1-1 | Compound 2-12 | 60 | 2 | 22 | 18 |
| Example 26 | Compound 1-1 | Compound 2-13 | 60 | 2 | 22 | 18 |
| Example 27 | Compound 1-1 | Compound 2-14 | 60 | 2 | 22 | 18 |
| Example 28 | Compound 1-1 | Compound 2-15 | 60 | 2 | 22 | 18 |
| Example 29 | Compound 1-1 | Compound 2-16 | 60 | 2 | 22 | 18 |
| Example 30 | Compound 1-1 | Compound 2-17 | 60 | 2 | 22 | 18 |
| Example 31 | Compound 1-1 | Compound 2-18 | 60 | 2 | 22 | 18 |
| Example 32 | Compound 1-1 | Compound 2-19 | 60 | 2 | 22 | 18 |
| Example 33 | Compound 1-1 | Compound 2-20 | 60 | 2 | 22 | 18 |
| Example 34 | Compound 1-1 | Compound 2-3 | 60 | 0.005 | 22 | 18 |
| Example 35 | Compound 1-1 | Compound 2-3 | 60 | 10 | 22 | 18 |
| Example 36 | Compound 1-1 | Compound 2-3 | 20 | 2 | 22 | 18 |
| Example 37 | Compound 1-1 | Compound 2-3 | 80 | 2 | 22 | 18 |
| Example 38 | Compound 1-1 | Compound 2-3 | 60 | 2 | 18 | 18 |
| Example 39 | Compound 1-1 | Compound 2-3 | 60 | 2 | 30.5 | 18 |

(continued)

| Serial No. | Electrolyte solution | | | | Negative electrode | |
|---|---|---|---|---|---|---|
| | Additive | First solvent | Mass content of first solvent in solvent (%) | Mass content of additive in electrolyte solution (%) | Porosity of negative electrode plate (%) | Dv50 particle size of negative electrode active material (μm) |
| Example 40 | Compound 1-1 | Compound 2-3 | 60 | 2 | 22 | 6 |
| Example 41 | Compound 1-1 | Compound 2-3 | 60 | 2 | 22 | 20 |
| Example 42 | Compound 1-1 | Compound 2-3 | 60 | 0.001 | 22 | 18 |
| Example 43 | Compound 1-1 | Compound 2-3 | 60 | 15 | 22 | 18 |
| Example 44 | Compound 1-1 | Compound 2-3 | 10 | 2 | 22 | 18 |
| Example 45 | Compound 1-1 | Compound 2-3 | 90 | 2 | 22 | 18 |
| Example 46 | Compound 1-1 | Compound 2-3 | 60 | 2 | 15 | 18 |
| Example 47 | Compound 1-1 | Compound 2-3 | 60 | 2 | 35 | 18 |
| Example 48 | Compound 1-1 | Compound 2-3 | 60 | 2 | 22 | 3 |
| Example 49 | Compound 1-1 | Compound 2-3 | 60 | 2 | 22 | 25 |
| Comparative Example 1 | Comparative compound 1 | Compound 2-3 | 60 | 2 | 22 | 18 |
| Comparative Example 2 | Comparative compound 2 | Compound 2-3 | 60 | 2 | 22 | 18 |

**Material testing and battery testing**

(1) Testing for porosity of negative electrode plate:

A small wafer sample with a diameter of 14 mm was cut from the negative electrode plate with a negative electrode film coated on a single side; the negative electrode film was tested for thickness (thickness of the negative electrode plate-thickness of the negative electrode current collector); apparent volume Vapparent of the negative electrode film was calculated as per the cylinder volume calculation formula; true volume of the negative electrode plate was measured by gas replacement using a true density tester (model Micromeritics AccuPyc II 1340) with an inert gas helium as the medium with reference to GB/T 24586-2009; the volume of the negative electrode current collector was subtracted from the true volume of the negative electrode plate to obtain the true volume Vtrue of the negative electrode film; and the porosity of the negative electrode plate was calculated as per the following formula. 30 electrode plate samples may be tested, to obtain an average value of the results.

Porosity of negative electrode plate=100%×(Vapparent of negative electrode film-Vtrue of negative electrode film)/Vapparent of negative electrode film.

(2) Testing for volume average particle size Dv50:
tested using a laser particle size analyzer Master Size 300 with reference to GB/T 19077-2016 Particle size analysis-Laser diffraction methods.
(3) Testing for fast charging performance:

Charge-discharge capacity of the secondary battery was calibrated using 1/3C current, to determine the threshold of the first charge cut-off voltage as 3.65V based on the capacity calibration.

At 25°C, the secondary battery was first charged to 10% SOC at 0.1C, and then charged sequentially at currents of 3C, 2.5C, 2C, 1.5C, 1C, and 0.5C. In the above charging process, a first charge cut-off voltage and a second lithium plating warning voltage of the secondary battery were acquired in real time. When the first charge cut-off voltage was greater than 3.65V or the second lithium plating warning voltage was less than or equal to -0.5mV, charging at the present current was stopped to continue charging at the next current in the above sequence until the secondary battery reached 80% SOC, and the charging was complete. The cumulative duration for charging the secondary battery from 10% SOC to 80% SOC was used as the charging duration.

(4) Testing for cycling performance:

At 25°C, each of the secondary batteries was first fully discharged at 1C and then tested. The test process was as follows: at 60°C, the secondary battery was charged to a voltage of 3.65V at a constant current of 0.5C, then charged to a current of 0.05C at a constant voltage of 3.65V, left to stand for 5 min, and discharged to a voltage of 2.5V at a constant current of 0.5C, which was a charge-discharge cycle process. The discharge capacity in this case was denoted as the first cycle discharge capacity. The secondary battery was tested through a plurality of charge-discharge cycles at 60°C as per the above method, to calculate the cycling capacity retention rate of the battery as per the following formula until the cycling capacity retention rate decayed to 80%, and record the number of cycles of the secondary battery.

Cycling capacity retention rate (%)=(N-th cycle discharge capacity/first cycle discharge capacity)×100%.

(5) Testing for storage performance:

In an environment at a constant temperature of 25°C, the secondary battery was charged to 3.65V at 0.33C, and then discharged to 2.5V at 0.33C, to test for the discharge capacity $D_1$; the secondary battery was stored in an environment at a constant temperature of 60°C, and taken out for testing every 30 days. During each testing, the secondary battery was cooled to 25°C, first charged to 3.65V at 0.33C, and then discharged to 2.5V at 0.33C, to test for the discharge capacity. The number of storage days and the discharge capacity during each testing were recorded to plot with the number of storage days as the X-axis and the discharge capacity as the Y-axis to obtain the number of storage days when the discharge capacity decayed to 90% of $D_1$.

(6) Testing for volume expansion rate:

At 25°C, the secondary battery was first charged to 3.65V at a constant current of 0.33C, then charged to a current of 0.05C at a constant voltage of 3.65V, then discharged to 2.5V at a constant current of 0.33C, wherein the discharge capacity in this case was the discharge capacity of the secondary battery before high-temperature storage; then charged to 3.65V at a constant current of 0.33C, charged to a current of 0.05C at a constant voltage of 3.65V, and fully charged, to test for volume of the secondary battery by drainage. Then, the secondary battery was stored at 60°C for 60 days. After the storage was complete, the secondary battery was transferred into an environment at 25°C to test for the volume of the secondary battery by drainage. The volume expansion rate of the secondary battery was calculated as per the following formula.

Volume expansion rate of secondary battery=100%×(volume after storage-volume before storage) / volume before storage.

The results of the above items (1) to (2) are shown in Table 2, and the results of the above items (3) to (6) are shown in Table 3.

Table 3: Performance test results of Examples 1-49 and Comparative Examples 1-2

| Serial No. | Fast charge duration (min) | Number of cycles at 60°C when decaying by 80% | Number of storage days at 60°C when decaying by 90% | Volume expansion rate after storage at 100% SOC at 60°C for 30 days (%) |
|---|---|---|---|---|
| Example 1 | 21.5 | 1396 | 69 | 5.17 |
| Example 2 | 23.1 | 1377 | 62 | 5.89 |

(continued)

| Serial No. | Fast charge duration (min) | Number of cycles at 60°C when decaying by 80% | Number of storage days at 60°C when decaying by 90% | Volume expansion rate after storage at 100% SOC at 60°C for 30 days (%) |
|---|---|---|---|---|
| Example 3 | 21.9 | 1381 | 65 | 5.54 |
| Example 4 | 23.4 | 1356 | 61 | 5.34 |
| Example 5 | 22.5 | 1367 | 62 | 5.44 |
| Example 6 | 22.7 | 1311 | 59 | 5.67 |
| Example 7 | 23.2 | 1341 | 64 | 5.35 |
| Example 8 | 23.5 | 1315 | 61 | 5.78 |
| Example 9 | 22.7 | 1355 | 64 | 5.25 |
| Example 10 | 23.3 | 1377 | 66 | 5.48 |
| Example 11 | 23.4 | 1361 | 65 | 5.37 |
| Example 12 | 23.7 | 1377 | 62 | 5.24 |
| Example 13 | 23.5 | 1357 | 63 | 5.43 |
| Example 14 | 23.6 | 1311 | 67 | 5.23 |
| Example 15 | 25.1 | 1053 | 51 | 6.79 |
| Example 16 | 24.8 | 1421 | 75 | 4.95 |
| Example 17 | 25.4 | 1456 | 78 | 4.81 |
| Example 18 | 25.9 | 1411 | 74 | 4.97 |
| Example 19 | 26.1 | 1395 | 72 | 5.01 |
| Example 20 | 26.3 | 1371 | 71 | 5.12 |
| Example 21 | 22.6 | 1354 | 65 | 5.34 |
| Example 22 | 22.8 | 1328 | 63 | 5.47 |
| Example 23 | 23 | 1312 | 61 | 5.31 |
| Example 24 | 26.4 | 1361 | 70 | 5.22 |
| Example 25 | 22.7 | 1318 | 62 | 5.37 |
| Example 26 | 18.2 | 911 | 45 | 9.54 |
| Example 27 | 18.9 | 954 | 48 | 9.14 |
| Example 28 | 19.2 | 971 | 52 | 8.87 |
| Example 29 | 19.5 | 954 | 50 | 8.91 |
| Example 30 | 17.5 | 865 | 41 | 9.78 |
| Example 31 | 17.8 | 884 | 43 | 9.65 |
| Example 32 | 18.5 | 842 | 42 | 9.62 |
| Example 33 | 19.8 | 961 | 49 | 8.51 |
| Example 34 | 21.7 | 1248 | 62 | 5.81 |
| Example 35 | 22.4 | 1471 | 73 | 4.92 |
| Example 36 | 25.1 | 1507 | 75 | 4.71 |
| Example 37 | 20.7 | 1211 | 62 | 6.31 |
| Example 38 | 22.5 | 1304 | 65 | 5.31 |
| Example 39 | 22.7 | 1289 | 62 | 5.29 |

(continued)

| Serial No. | Fast charge duration (min) | Number of cycles at 60°C when decaying by 80% | Number of storage days at 60°C when decaying by 90% | Volume expansion rate after storage at 100% SOC at 60°C for 30 days (%) |
|---|---|---|---|---|
| Example 40 | 21.4 | 1255 | 60 | 5.65 |
| Example 41 | 22.9 | 1277 | 61 | 5.41 |
| Example 42 | 21.9 | 1048 | 57 | 6.89 |
| Example 43 | 23.9 | 1491 | 74 | 4.82 |
| Example 44 | 26.9 | 1517 | 77 | 4.64 |
| Example 45 | 20.1 | 961 | 54 | 9.31 |
| Example 46 | 23.4 | 1274 | 62 | 5.47 |
| Example 47 | 23.1 | 1219 | 60 | 5.39 |
| Example 48 | 21.2 | 1055 | 57 | 6.65 |
| Example 49 | 23.7 | 1241 | 58 | 5.81 |
| Comparative Example 1 | 21.9 | 1256 | 64 | 5.97 |
| Comparative Example 2 | 23.3 | 1256 | 61 | 7.21 |

As can be seen from the above results:
compared with Comparative Example 1, the battery in each of Examples 1-10 of the present application has higher cycling performance and lower aerogenous quantity in cycles. Compared with Comparative Example 2, the battery in each of Examples 11-13 of the present application has higher cycling performance, higher storage performance, and lower aerogenous quantity in cycles, showing that the battery using the non-aqueous electrolyte solution of the present application has improved cycling performance, improved storage performance, and reduced aerogenous quantity in cycles.

Compared with Example 42, the battery in each of Examples 1 and 34-35 of the present application has higher cycling performance, higher storage performance, and lower aerogenous quantity in cycles. Compared with Example 43, the battery in each of 1 and 34-35 of the present application has higher fast charging performance.

Compared with Example 44, the battery in each of Examples 1 and 36-37 of the present application has higher fast charging performance. Compared with Example 45, the battery in each of Examples 1 and 36-37 of the present application has higher cycling performance, higher storage performance, and lower aerogenous quantity in cycles.

Compared with Example 46, the battery in each of Examples 1 and 38-39 of the present application has higher fast charging performance, higher cycling performance, and lower aerogenous quantity in cycles. Compared with Example 47, the battery in each of Examples 1 and 38-39 of the present application has higher fast charging performance, higher cycling performance, higher storage performance, and lower aerogenous quantity in cycles.

Compared with Example 48, the battery in each of Examples 1 and 40-41 of the present application has higher cycling performance, higher storage performance, and lower aerogenous quantity in cycles. Compared with Example 49, the battery in each of Examples 1 and 40-41 of the present application has higher fast charging performance, higher cycling performance, higher storage performance, and lower aerogenous quantity in cycles.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

**1.** A non-aqueous electrolyte solution for a secondary battery, comprising an additive and a non-aqueous solvent, wherein the non-aqueous solvent comprises a first solvent; and

the additive comprises a cyclic sulfate compound represented by formula (I),

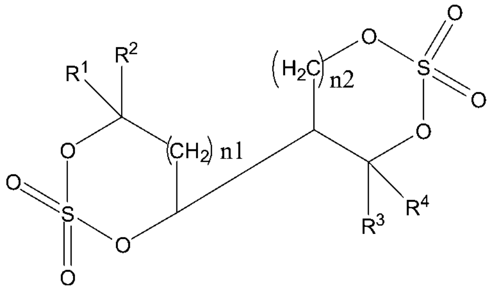

formula (I)

wherein $R^1$, $R^2$, $R^3$, and $R^4$ are each independently selected from any one of a radical having a structure represented by formula (II), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, n1 and n2 are each independently any integer of 0-2,

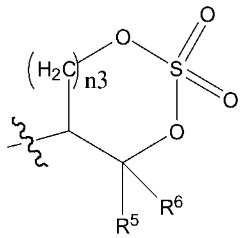

formula (II)

$R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, n3 is any integer of 0-2; and
$R^1$ and $R^2$ are not simultaneously hydrogen atoms, and $R^3$ and $R^4$ are not simultaneously hydrogen atoms;
or, $R^1$, $R^2$, $R^3$, $R^4$, $R^5$, and $R^6$ satisfy conditions below:

$R^1$ and $R^2$ are simultaneously hydrogen atoms, one of $R^3$ and $R^4$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
or, $R^1$, $R^2$, $R^3$, $R^4$, $R^5$, and $R^6$ satisfy conditions below:

$R^3$ and $R^4$ are simultaneously hydrogen atoms, one of $R^1$ and $R^2$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
the first solvent is selected from one or more of ethylene glycol dimethyl ether, a compound represented by formula A, and a compound represented by formula B,

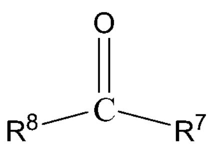

formula A

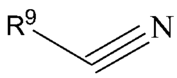

formula B

wherein $R^7$, $R^8$, and $R^9$ are each independently selected from any one of a C1-C6 alkyl, a C1-C6 haloalkyl, a C1-C6 alkoxy, and a C1-C6 haloalkoxy; and
further, $R^7$ and $R^8$ do not comprise oxygen atoms simultaneously.

**2.** The non-aqueous electrolyte solution for a secondary battery according to claim 1, wherein the cyclic sulfate compound has a structure represented by formula (I-1),

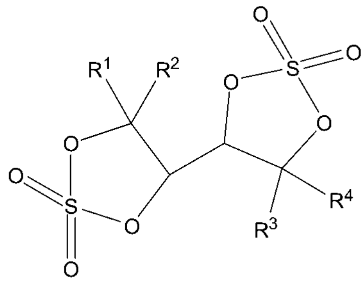

formula (I-1)

$R^1$, $R^2$, $R^3$, and $R^4$ are each independently selected from any one of a radical having a structure represented by formula (II-1), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl;

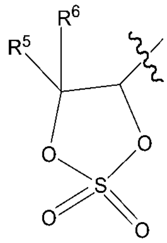

formula (II-1)

and $R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl.

**3.** The non-aqueous electrolyte solution for a secondary battery according to claim 2, wherein

$R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, a C1-C3 haloalkoxy, and a cyano; $R^5$ and $R^6$ are each independently selected from any one of a hydrogen atom, a halogen atom, a C1-C3 alkyl, a C1-C3 haloalkyl, a C1-C3 alkoxy, a C1-C3 haloalkoxy, and a cyano;
optionally, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, and a cyano; $R^5$ and $R^6$ are each independently selected from any one of a hydrogen atom, a halogen atom, a C1-C3 alkyl, a C1-C3 haloalkyl, a C1-C3 alkoxy, and a cyano;
more optionally, $R^1$, $R^2$, $R^3$, and $R^4$ are each independently selected from any one of a radical having a structure represented by general formula (II-1), a hydrogen atom, a F atom, a Cl atom, a Br atom, a methyl, an ethyl, a propyl, an isopropyl, a trifluoromethyl, an ethoxy, and a cyano; $R^5$ and $R^6$ are each independently selected from any one of a hydrogen atom, a F atom, a Cl atom, a Br atom, a methyl, an ethyl, a propyl, an isopropyl, a trifluoromethyl, an ethoxy, and a cyano; and
further optionally, the radical having a structure represented by general formula (II-1) is selected from any one of radicals below:

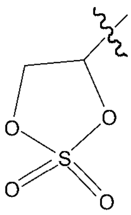 , 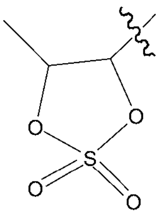 , 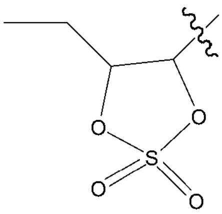 , 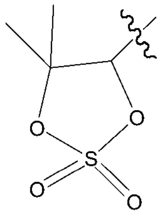 , 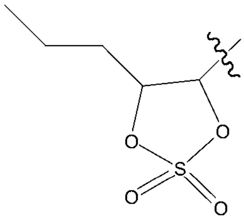 , 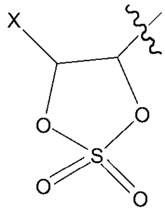 ,

or

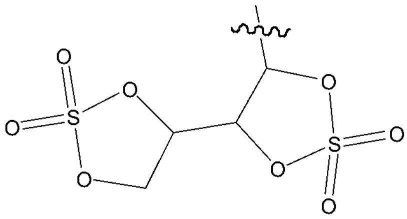 ,

wherein X is a F atom, a Cl atom, or a Br atom.

4. The non-aqueous electrolyte solution for a secondary battery according to any one of claims 1 to 3, wherein $R^1$, $R^2$, $R^3$, and $R^4$ are each independently selected from any one of

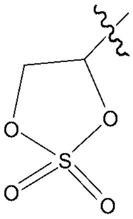 , 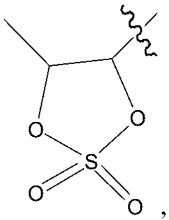 , 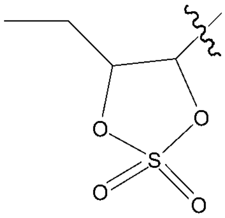 ,

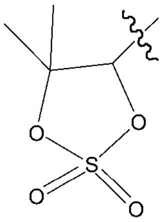 , 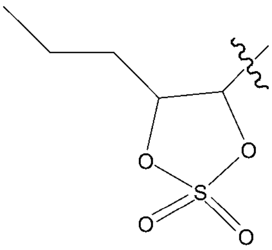 , 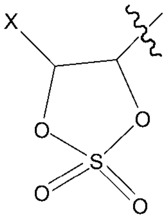 , 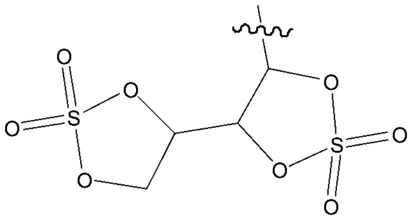 ,

a hydrogen atom, a F atom, a Cl atom, a Br atom, a methyl, an ethyl, a propyl, an isopropyl, a trifluoromethyl, an ethoxy, and a cyano, and the X is a F atom; and
optionally, $R^1$, $R^2$, $R^3$, and $R^4$ are each independently selected from any one of

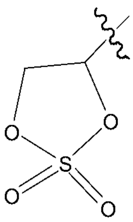 , 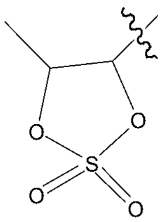 ,

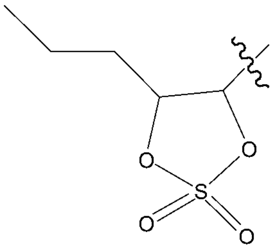, 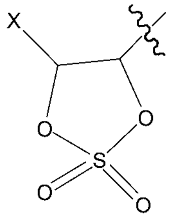, 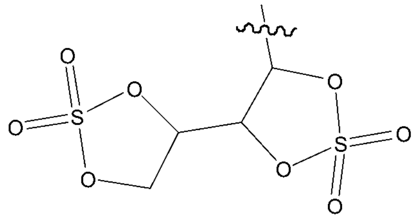,

a hydrogen atom, a F atom, a methyl, an ethyl, a propyl, a trifluoromethyl, an ethoxy, and a cyano, and the X is a F atom.

**5.** The non-aqueous electrolyte solution for a secondary battery according to any one of claims 1 to 4, wherein the cyclic sulfate compound is selected from compounds below:

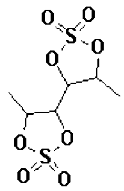 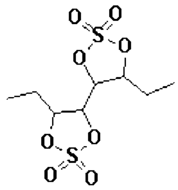 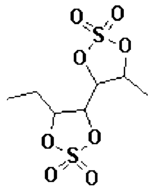 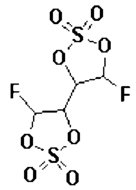 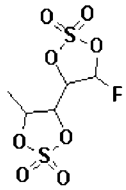

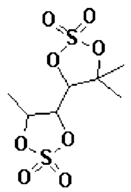 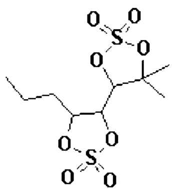 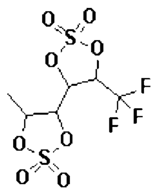 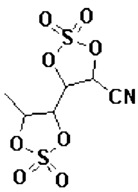 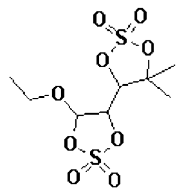

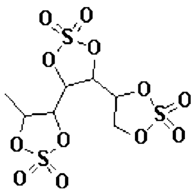 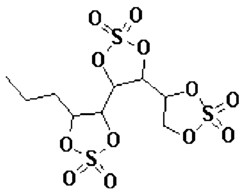 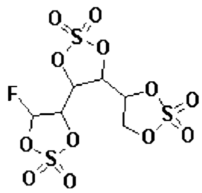 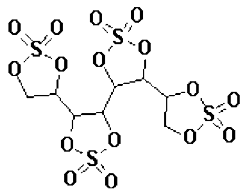 .

**6.** The non-aqueous electrolyte solution for a secondary battery according to any one of claims 1 to 5, wherein $R^7$, $R^8$, and $R^9$ are each independently selected from any one of a C1-C3 alkyl, a C1-C3 haloalkyl, a C1-C3 alkoxy, and a C1-C3 haloalkoxy; and $R^7$ and $R^8$ do not comprise oxygen atoms simultaneously; and
optionally, $R^7$, $R^8$, and $R^9$ are each independently selected from any one of methyl, ethyl, propyl, fluoromethyl, fluoroethyl, fluoropropyl, methoxy, ethoxy, propoxy, fluoromethoxy, fluoroethoxy, and fluoropropoxy.

**7.** The non-aqueous electrolyte solution for a secondary battery according to any one of claims 1 to 6, wherein $R^7$ and $R^8$ are each independently selected from any one of a C1-C6 alkyl, a C1-C6 haloalkyl, a C1-C6 alkoxy, and a C1-C6 haloalkoxy; $R^9$ is selected from any one of a C1-C6 alkyl and a C1-C6 haloalkyl; and $R^7$ and $R^8$ do not comprise oxygen atoms simultaneously.

**8.** The non-aqueous electrolyte solution for a secondary battery according to any one of claims 1 to 7, wherein $R^7$ and $R^8$ are each independently selected from any one of a C1-C3 alkyl, a C1-C3 haloalkyl, a C1-C3 alkoxy, and a C1-C3 haloalkoxy; $R^9$ is selected from any one of a C1-C3 alkyl and a C1-C3 haloalkyl; and $R^7$ and $R^8$ do not comprise oxygen atoms simultaneously;

optionally, $R^7$ and $R^8$ are each independently selected from any one of a methyl, an ethyl, a propyl, a fluoromethyl,

a fluoroethyl, a fluoropropyl, a methoxy, an ethoxy, a propoxy, a fluoromethoxy, a fluoroethoxy, and a fluoropropoxy; $R^9$ is selected from any one of a methyl, an ethyl, a propyl, a fluoromethyl, a fluoroethyl, and a fluoropropyl; and
more optionally, $R^7$ and $R^8$ are each independently selected from any one of a methyl, an ethyl, a monofluoromethyl, a difluoromethyl, a trifluoromethyl, a 2-fluoroethyl, a methoxy, an ethoxy, a difluoromethoxy, and a 2,2,2-trifluoroethoxy; and $R^9$ is selected from any one of a methyl, an ethyl, a propyl, and a 2-fluoroethyl.

**9.** The non-aqueous electrolyte solution for a secondary battery according to any one of claims 1 to 8, wherein the first solvent is selected from one or more of compounds below:

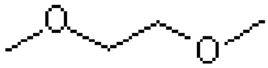 , 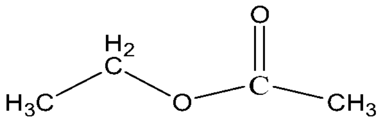 , 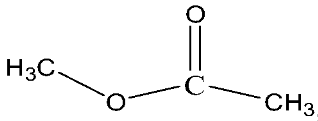 ,

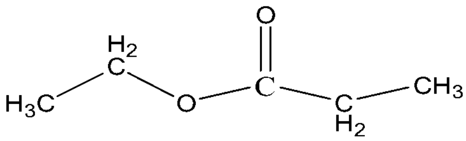 , 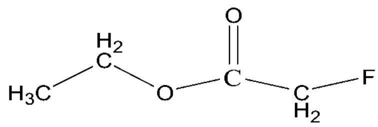 ,

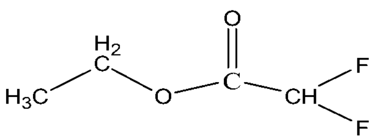 , 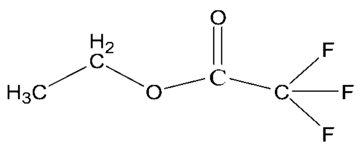 , 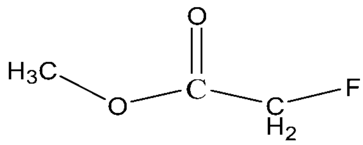 ,

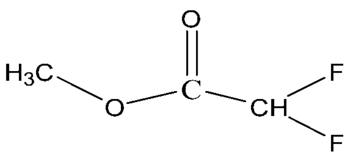 , 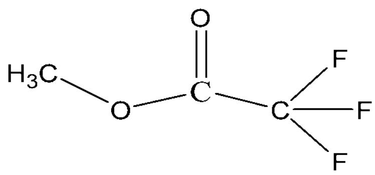 , 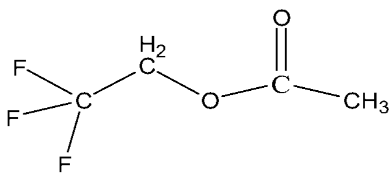 ,

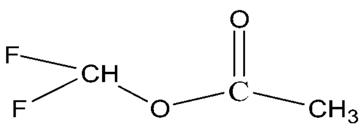 , 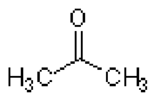 , 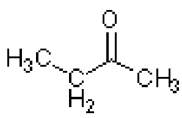 , 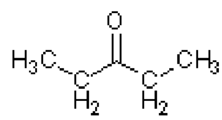 ,

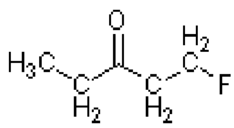 , 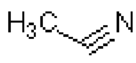 , 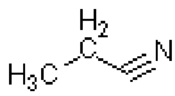 , 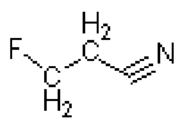 , and 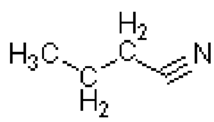 .

**10.** The non-aqueous electrolyte solution for a secondary battery according to any one of claims 1 to 9, wherein mass content of the additive in the non-aqueous electrolyte solution is 0.001%-15%, optionally 0.005%-10%, more optionally 0.05%-5%.

**11.** The non-aqueous electrolyte solution for a secondary battery according to any one of claims 1 to 10, wherein mass content of the first solvent in the non-aqueous solvent is 10%-90%, optionally 20%-80%, more optionally 30%-70%.

**12.** A secondary battery, comprising the non-aqueous electrolyte solution for a secondary battery according to any one of claims 1 to 11 and a negative electrode plate, wherein the negative electrode plate comprises a negative electrode active material; and optionally, the secondary battery is a lithium secondary battery.

**13.** The secondary battery according to claim 12, wherein porosity of the negative electrode plate is 15%-35%, optionally

18%-30.5%, more optionally 20%-27%.

**14.** The secondary battery according to claim 12 or 13, wherein volume average particle size Dv50 of the negative electrode active material is greater than or equal to 3 μm, optionally greater than or equal to 6 μm or 3-25 μm, more optionally 15-20 μm.

**15.** An electrical apparatus, comprising the non-aqueous electrolyte solution for a secondary battery according to any one of claims 1 to 11 or the secondary battery according to any one of claims 12 to 14.

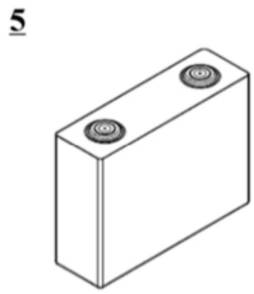


FIG. 1

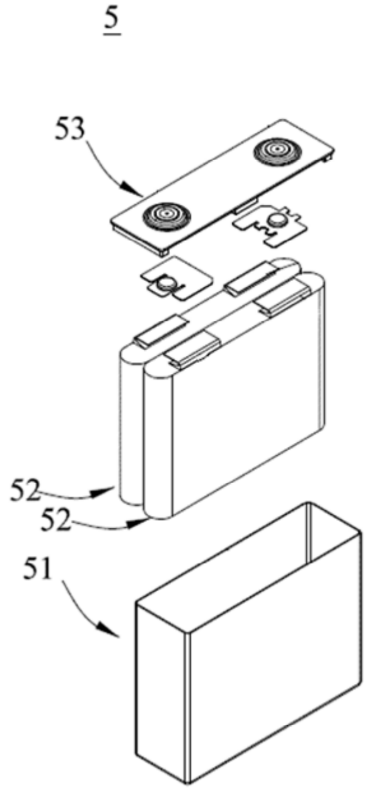


FIG. 2

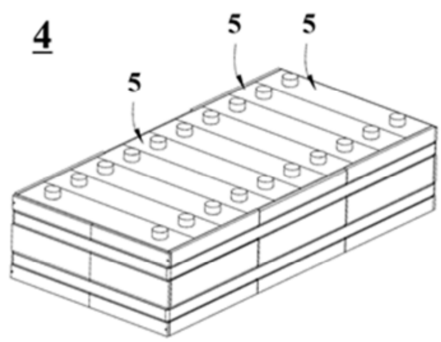


FIG. 3

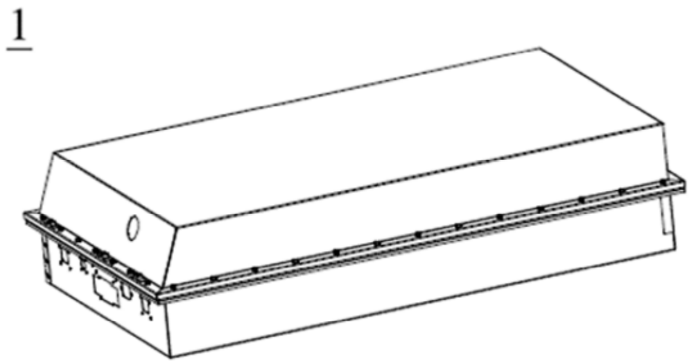


FIG. 4

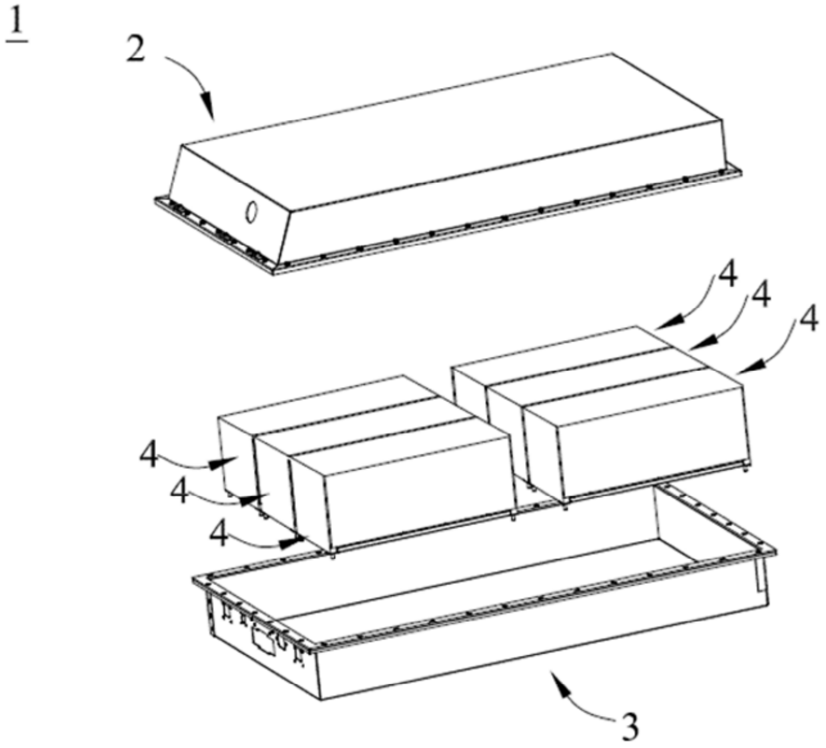


FIG. 5

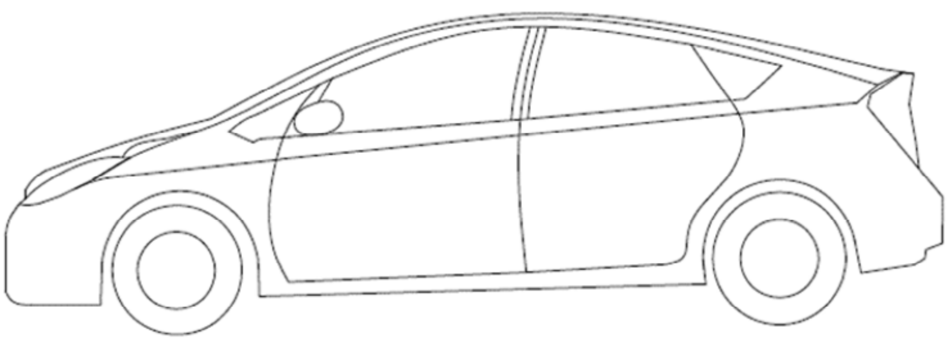

FIG. 6

**INTERNATIONAL SEARCH REPORT**

International application No.
**PCT/CN2023/097841**

**A. CLASSIFICATION OF SUBJECT MATTER**

H01M 10/0567(2010.01)i; H01M 10/0569(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, ENTXT, ENTXTC, DWPI, CNKI: 电池, 电解液, 环状, 硫酸酯, 溶剂, 乙二醇二甲醚, 腈, 羧酸酯, 粘度, battery, electrolyte, sulfate, cyclic, dimethoxyethane, nitrile, carboxylic, viscosity

**C. DOCUMENTS CONSIDERED TO BE RELEVANT**

| Category* | Citation of document, with indication, where appropriate, of the relevant passages | Relevant to claim No. |
|---|---|---|
| Y | CN 110386916 A (CHANGSHU CHANGEL CHEMICAL CO., LTD.) 29 October 2019 (2019-10-29)<br>description, paragraphs 1-25 | 1-15 |
| Y | CN 102484284 A (MITSUBISHI CHEM CORP.) 30 May 2012 (2012-05-30)<br>description, paragraphs 15-240 | 1-15 |
| A | CN 108701864 A (CENTRAL GLASS CO., LTD.) 23 October 2018 (2018-10-23)<br>entire document | 1-15 |
| A | CN 107851847 A (CENTRAL GLASS CO., LTD.) 27 March 2018 (2018-03-27)<br>entire document | 1-15 |
| A | CN 114094109 A (SHENZHEN CAPCHEM TECHNOLOGY CO., LTD.) 25 February 2022 (2022-02-25)<br>entire document | 1-15 |
| A | CN 111244541 A (NINGDE AMPEREX TECHNOLOGY LTD.) 05 June 2020 (2020-06-05)<br>entire document | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 October 2023** | **25 December 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/097841**

**C. DOCUMENTS CONSIDERED TO BE RELEVANT**

| Category* | Citation of document, with indication, where appropriate, of the relevant passages | Relevant to claim No. |
|---|---|---|
| A | CN 112349961 A (NINGDE AMPEREX TECHNOLOGY LTD.) 09 February 2021 (2021-02-09)<br>entire document | 1-15 |

Form PCT/ISA/210 (second sheet) (July 2022)

**INTERNATIONAL SEARCH REPORT**
**Information on patent family members**

International application No.
**PCT/CN2023/097841**

| Patent document cited in search report | Publication date (day/month/year) | Patent family member(s) | Publication date (day/month/year) |
|---|---|---|---|
| CN 110386916 A | 29 October 2019 | None | |
| CN 102484284 A | 30 May 2012 | JP 2011096643 A | 12 May 2011 |
| | | JP 5678539 B2 | 04 March 2015 |
| | | EP 2485316 A1 | 08 August 2012 |
| | | EP 2485316 A4 | 11 January 2017 |
| | | EP 2485316 B1 | 28 November 2018 |
| | | US 2012244425 A1 | 27 September 2012 |
| | | KR 20120090969 A | 17 August 2012 |
| | | JP 2015026625 A | 05 February 2015 |
| | | JP 6028785 B2 | 16 November 2016 |
| | | US 2013084493 A1 | 04 April 2013 |
| | | US 9196903 B2 | 24 November 2015 |
| | | WO 2011040307 A1 | 07 April 2011 |
| CN 108701864 A | 23 October 2018 | PL 3416229 T3 | 16 November 2020 |
| | | JPWO 2017138452 A1 | 06 December 2018 |
| | | JP 6955165 B2 | 27 October 2021 |
| | | WO 2017138452 A1 | 17 August 2017 |
| | | HUE 049503 T2 | 28 September 2020 |
| | | KR 20180108796 A | 04 October 2018 |
| | | KR 20210013779 A | 05 February 2021 |
| | | KR 102391374 B1 | 27 April 2022 |
| | | US 2021020992 A1 | 21 January 2021 |
| | | US 11302964 B2 | 12 April 2022 |
| | | EP 3416229 A1 | 19 December 2018 |
| | | EP 3416229 A4 | 20 March 2019 |
| | | EP 3416229 B1 | 13 May 2020 |
| CN 107851847 A | 27 March 2018 | WO 2017026181 A1 | 16 February 2017 |
| | | US 2020212485 A1 | 02 July 2020 |
| | | US 11114693 B2 | 07 September 2021 |
| | | HUE 052877 T2 | 28 May 2021 |
| | | PL 3333962 T3 | 19 April 2021 |
| | | EP 3333962 A1 | 13 June 2018 |
| | | EP 3333962 A4 | 07 October 2020 |
| | | JP 2017037808 A | 16 February 2017 |
| | | JP 6098684 B2 | 22 March 2017 |
| | | KR 20180038038 A | 13 April 2018 |
| | | KR 102016047 B1 | 29 August 2019 |
| CN 114094109 A | 25 February 2022 | None | |
| CN 111244541 A | 05 June 2020 | WO 2021146839 A1 | 29 July 2021 |
| | | US 2021408603 A1 | 30 December 2021 |
| | | KR 20220121263 A | 31 August 2022 |
| | | IN 202227045402 A | 02 September 2022 |
| | | EP 4092799 A1 | 23 November 2022 |
| | | EP 4092799 A4 | 08 March 2023 |
| | | JP 2023511138 A | 16 March 2023 |
| CN 112349961 A | 09 February 2021 | None | |

Form PCT/ISA/210 (patent family annex) (July 2022)